(19) Europäisches Patentamt
European Patent Office
Office européen des brevets

(11) EP 0 438 090 B2

(12) **NEUE EUROPÄISCHE PATENTSCHRIFT**

(45) Veröffentlichungstag und Bekanntmachung des Hinweises auf die Entscheidung über den Einspruch:
**04.02.2004 Patentblatt 2004/06**

(45) Hinweis auf die Patenterteilung:
**06.04.1994 Patentblatt 1994/14**

(21) Anmeldenummer: **91100338.2**

(22) Anmeldetag: **12.01.1991**

(51) Int Cl.[7]: **C09D 175/06**, C09D 17/00, C09D 5/02, C08G 18/42

(54) **Bindemittelzusammensetzung zur Herstellung von Pigmentpasten und wässrige Überzugsmittel, die diese Pigmentpasten enthalten**

Binder composition for the preparation of pigment pastes and aqueous coating compositions containing these pigment pastes

Composition liant pour la préparation de pâtes pigmentaires et compositions de revêtement aqueuses contenant ces pâtes pigmentaires

(84) Benannte Vertragsstaaten:
**AT BE CH DE DK ES FR GB GR IT LI NL SE**

(30) Priorität: **13.01.1990 DE 4000889**

(43) Veröffentlichungstag der Anmeldung:
**24.07.1991 Patentblatt 1991/30**

(73) Patentinhaber: **Herberts Gesellschaft mit beschränkter Haftung**
**42285 Wuppertal (DE)**

(72) Erfinder:
- **Patzschke, Hans-Peter, Dr.**
  **W-5600 Wuppertal 2 (DE)**
- **Goebel, Armin**
  **W-5600 Wuppertal 2 (DE)**
- **Döbert, Jürgen**
  **W-4322 Sprockhövel 2 (DE)**
- **Windmann, Reinhard**
  **W-5600 Wuppertal 2 (DE)**

(74) Vertreter: **Gille Hrabal Struck Neidlein Prop Roos**
**Patentanwälte**
**Brucknerstrasse 20**
**40593 Düsseldorf (DE)**

(56) Entgegenhaltungen:
**EP-A- 0 228 003** **EP-A- 0 229 148**

- **DATABASE WPIL, no. 82-07 689 DERWENT PUBLICATIONS LTD., London, GB; & JP-A-57 178 863**
- **DATABASE WPIL, no. 89-170 457 DERWENT PUBLICATIONS LTD., London, GB; & JP-A-01 113 230**
- **DATABASE WPI, no. 79-91 577 DERWENT PUBLICATIONS LTD., London, GB; & JP-A-54 143 306**

EP 0 438 090 B2

## Beschreibung

Die Erfindung betrifft Bindemittelzusammensetzungen, die zum Anreiben von Pigmenten zur Einarbeitung in wasserverdünnbare Bindemittel für wässrige Überzugsmittel geeignet sind.

Beim Pigmentieren von wasserverdünnbaren Harzen, insbesondere für Hydrobasecoats, treten im allgemeinen dadurch Probleme auf, daß die Pigmente agglomerieren oder sedimentieren. Zur Herstellung von stabilen, wasserverdünnbaren Lacken ist es notwendig, die Pigmente gut zu benetzen und in geeigneten Dispergierapparaten sehrfein zu vermahlen (<10 µm, vorzugsweise <3 µm). Bei Einsatz von lösemittelarmen, wasserverdünnbaren Dispersionen oder Emulsionen können dabei die Scherkräfte aufgrund der sehr niedrigen Viskositäten nicht ausreichend wirken. Es ist daher notwendig in diesen Fällen einen Teil des zur Verwendung gelangenden Bindemittels durch ein Pastenharz zu ersetzen, in dem die Pigmente angerieben werden. Diese sogenannten Pigmentpasten, bzw. Mahlpasten werden anschließend mit dem restlichen Bindemittel vermischt ("aufgelackt" oder komplettiert). Nach Aufspritzen auf das Objekt wird im allgemeinen nach Antrocknen oder Ablüften ein Ein- oder Zweikomponenten-Klarlack aufgetragen und beide Schichten werden zusammen eingebrannt.

Die für derartige Mahlpasten eingesetzten Pastenharze (auch Anreibeharze oder Pigment-Trägerharze genannt) sollten eine Reihe von Eigenschaften erfüllen. So sollte das Pasten-Bindemittel

1. mit dem Hauptbindemittel im Film gut verträglich sein und in der erforderlichen Zusatzmenge die Eigenschaften des Lackes nicht nachteilig verändern,
2. ein gutes Benetzungsvermögen für die jeweiligen Pigmente aufweisen, um unter möglichst geringem Energieaufwand eine gleichmäßige, feinteilige Dispersion herstellen zu können,
3. in einem Viskositätsniveau liegen, das eine Anreibung mit möglichst hoher Pigment-Konzentration gestattet,
4. beim Auflacken Pigmentflockulationen verhindern,
5. über einen längeren Zeitraum lagerfähig sein, d.h. die Pasten dürfen nicht eindicken, bzw. die Pigmente dürfen nicht sedimentieren oder Agglomerate bilden,
6. nur solche Lösemittel enthalten, die die Teilchen des Hauptbindemittels nicht anquellen,
7. und keine Farbänderungen bewirken.

Wasserverdünnbare pigmentierte Lacke werden als Grundierung (Primer), Füller, Uni- oder Metallic-Basecoats eingesetzt, z.B. unter Verwendung von hochmolekularen Polyacrylat-Emulsionen, Poiyurethan-Dispersionen, Polyester oder Alkyd-Dispersionen. Spezielle Kombinationen für die Herstellung von Metallic-Basecoats, die anschließend mit konventionell gelösten oder Wasser-Klarlacken überspritzt werden, sind in der EP-A-260 447 und EP-A-297 576 beschrieben worden. Die in diesen Literaturstellen beschriebenen Anreibeharze bringen jedoch die im Gesamtsystem vorhandenen Grundeigenschaften der Lacke nicht voll zur Geltung. So werden in der EP-A-260 447 Polyester und Acrylatharze erwähnt. Die bevorzugten Acrylatharze zeigen zwar sehr gute Benetzungseigenschaften, sind aber mit den Polyurethan-Dispersionen, bzw. mit den mit Acrylmonomeren gepfropften Polyestern nicht voll verträglich. Das führt zu einer Beeinträchtigung des Metalleffektes. In der EP-A-297 576 werden auf Seite 10, Zeilen 38 bis 49 urethanmodifizierte Polyester mit einer Säurezahl von 40 bis 100 allgemein beschrieben, die durch Umsetzung eines OH-Gruppen enthaltenden gesättigten Polyesters mit einem oder mehreren aromatischen, cycloaliphatischen und/oder aliphatischen Polyisocyanaten bei einem Äquivalentverhältnis von OH-Gruppen zu Isocyanat-Gruppen von 10 : 1 bis 1 : 1 hergestellt werden. Beispiele für diese Art von Anreibeharz werden dort nicht gegeben. Praktische Versuche zeigen, daß diese Bindemittel aufgrund ihrer hohen Säurezahl die Feuchtigkeitsbeständlgkeiten des Lackes verschlechtern. In der DE-OS 34 09 080 werden Metalleffektlackierungen nach dem Zweischicht-Naß-in-Naß-Lackierverfahren mit emulgatorhaltigen wässrigen Dispersionen auf Basis von ölfreien Polyestern, Alkydharzen und/oder Acrylatharzen mit einer Säurezahl von maximal 30 und einer OH-Zahl von maximal 150 in Kombination mit wasserlöslichen Aminoplastharzen beschrieben. Die Beispiele beziehen sich nur auf ein mit Fettsäure modifiziertes urethanisiertes Alkydharz. Hinweise auf eine Verwendbarkeit als Pastenharze werden nicht gegeben.

Aufgabe der Erfindung ist die Bereitstellung eines Pastenharzes bzw. einer Pastenharzzusammensetzung, die für Anreibungen von Pigmenten und/oder Füllstoffen für wässrige überzugsmittel geeignet ist, selbst in Abwesenheit eines Emulgators eine gute Pigmentbenetzung ergibt und eine gute Verträglichkeit mit einer breiten Palette von Bindemitteln für wässrige überzugsmittel hat.

Diese Aufgabe wird gelöst durch eine zur Herstellung von Pigmentpasten geeignete Bindemitteizusammensetzung (Pastenharzzusammensetzung), die eine Viskosität von 50 bis 5000 mPa.s, gemessen in einer koaxialen Zylinder meßeinrichtung mit einem Schergefälle von 644 $sec^{-1}$ nach DIN 53019, und einem Festkörpergehalt von 20 bis 40 Gew.-%, wobei diese Zusammensetzung besteht aus 20 bis 50 Gewichtsteile Polyesterurethanharz mit einer Säurezahl von 10 bis 50, dessen Säuregruppen zu 70 bis 100 % neutralisiert sind, erhältlich durch Umsetzung von

- einem oder mehreren, von Carboxylgruppen freien Polyesterpolyolen mit einer OH-Zahl von 35 bis 200 und einem

Zahlenmittel der Molmasse von 500 bis 5000, die mit 2 bis 30 Gew.-%, bezogen auf das Polyesterpolyol, an niedermolekularen Diolen mit einer Molmasse von 60 bis 350, wobei ein Teil der nieder molekularen Diole mindestens eine zur Anionenbildung befähigte Säuregruppe enthält, und mit 0 bis 6 Gew.-%, bezogen auf das Polyesterpolyol, an niedermolekularen Triolen mit einer Molmasse von 60 bis 350 vermischt sind;

- worin die Polyesterpolyole erhältlich sind aus linear oder verzweigt aliphatischen, allcyclischen oder aromatischen Dicarbonsäuren, ausgewählt aus der Gruppe von Adipinsäure, 2.2.4-Trimethyladipinsäure, Azelainsäure, Sebacinsäure, 1.3- und 1.4-Cyclohexandicarbonsäure, 1.4- oder 1.3- Di- oder Tetrahydrophthalsäure, Isophthalsäure und/oder Terephthalsäure, und Dialkoholen, die 0 bis 6 Gew.-%, bezogen auf das Polyesterpolyol, der oben genannten Triole enthalten können,

oder worin die Polyesterpolyole erhältlich sind durch Kondensation von Hydroxycarbonsäuren oder deren Lactonen unter Bildung von wiederkehrenden Polyesteranteilen der Formel

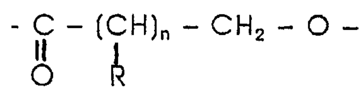

wobei n = 3 bis 18 und R = Wasserstoff, ein Alkyl-, Cycloalkyl- oder Alkoxyrest ist, mit

- einem oder mehreren Diisocyanaten, im Verhältnis der OH-Gruppen von Polyesterpolyol, Diol und Triol zu den NCO-Gruppen des. Diisocyanats von über 1,0 bis 1,3, wobei die Menge des Diisocyanats so gewählt wird, daß das erhaltene Polyesterurethan ein Zahlenmittel der Moimasse (Mn) von 2000 bis 30000 aufweist,

0,3 bis 18 Gewichtsteile Ammoniak und/oder Amin;
sowie
4 bis 25 Gewichtsteile eines oder mehreren zumindest teilweise mit Wasser mischbarer organischer Lösemittel; und
15 bis 75 Gewichtstelle Wasser.

Die erfindungsgemäße Pastenharzzusammensetzung enthält ein Polyesterurethanharz, bei dem es sich um einen OH-gruppenhaltigen urethanisierten ölfreien Polyester (= Pastenharz) handelt, dessen Herstellung durch Umsetzung von Diisocyanat mit einem Polyolgemischüberschuß erfolgt. Dabei wird bei einem Verhältnis der OH- zu NCO-Gruppen von über 1.00 bis 1.3, besonders bevorzugt bis 1.1 gearbeitet Das Polyolgemisch besteht aus einem oder mehreren carboxylgruppenfreien Polyesterdiolen unter Zusatz von 2 bis 30 Gew.-% von einem oder mehreren niedrigmolekularen Diolen und 0 bis 6 Gew.-%, bevorzugt bis zu 4 Gew.-% niedrigmolekularen Triolen, wobei ein Teil der Diole zusätzlich mindestens eine zur Anionenbildung befähigte Säuregruppe enthält.

Die Herstellung des Polyesterurethanharzes erfolgt beispielsweise bei Temperaturen von 20 bis 150°C, bevorzugt von 45 bis 90°C, gegebenenfalls unter Zusatz von Katalysatoren. Die Polyaddition wird nach raschen Mischen unter gutem Rühren in der Schmelze oder nach Verdünnen mit trockenen Lösemitteln, die nicht mit der isocyanatgruppe reagieren, durchgeführt Sie läuft solange, bis praktisch alle Isocyanatgruppen umgesetzt sind. Andererseits kann die Reaktion auch stufenweise vorgenommen werden. Beispielsweise stellt man zunächst lösemittelfrei unter Verwendung eines Isocyanat-überschusses zusammen mit dem OH-Polyester und demAnionengruppen bildenden Diol ein Isocyanat-Prepolymeres her, das nach Verdünnen mitwenig Lösemittel dann mit niedrigmolekularem Polyol kettenverlängert wird. Mit fortschreitendem Viskositätsanstieg wird mit weiterem Lösemittel verdünnt. Je nach Verwendung von Diolen oder höherfunktionellen Polyolen werden am Kettenende ein oder mehrere Hydroxylgruppen erhalten. Die Umsetzung mit Diolen zu Kettenenden mit nur einer Hydroxylgruppe wird bevorzugt. Bei der stufenweisen Herstellung kann auch in anderer Relhenfolge gearbeltet werden. Beispielsweise kann das Anionengruppen bildende Diol, wie Dimethylolpropionsäure, in organischem Lösemittel primär mit einem oder mehreren Diisocyanaten umgesetzt werden, worauf weiter mit Polyester und niedermolekularem von Anionengruppen freiem Diol und/oder Triol umgesetzt wird. Die Polyaddition kann gegebenenfalls bei einer gewünschten Temperatur und/oder Endviskosität durch monofunktionelle Zusatzmittel wie Butanonoxim, Dibutylamin oder alkoholischen Lösemittein abgebrochen werden.

Die zugesetzten Lösemittel sollen die Reaktionstellnehmer in flüssigem Zustand halten und eine bessere Temperaturkontrolle während der Reaktion ermöglichen. Verwendbare Lösemittel sind beispielsweise Dimethylformamid. Dimethylacetamid, 1-Methyl-2-pyrrolidon, Acetonitril, Tetrahydrofuran, Dioxan, Essigester, aber auch Ketone wie Aceton oder 2-Butanon, vollveretherte Mono- oder Diglykole von Ethylenglykol oder Propylenglykol, wie Diethylenglykol-dimethylether oder Propylenglykol-dimethylether, sowie mit Methoxygruppen substituierte Ketone wie Methoxyhexanon. Die Lösemittel werden entweder nach der Umsetzung gegebenenfalls unter Vakuum abdestilliert oder verbleiben in dem herzustellenden Pastenbindemittel als Lösemittelanteil. Als Katalysatoren werden gegebenenfalls geringe Mengen von Organozinnverbindungen, wie beispielsweise Dibutylzinndilaurat, Dibutylzinnoxid, Dibutylzinndiphenolat oder/und tertiäre Amine wie beispielsweise Triethylamin, Benzyldimethylamin, 1,4-Diazabicyclo(2.2.2)octan, Bis-(dimethylamino-methyl)phenol, Bis-(2-dimethylamino-ethyl)ether oder Tetramethyl-guanidin. zugegeben.

Die Herstellung des Polyesterpolyols kann auf verschiedene Weise erfolgen, beispielsweise in der Schmelze oder durch azeotrope Kondensation bei Temperaturen von z.B. 160 bis 260 °C, bevorzugt aus Dicarbonsäure und Dialkoholen, die gegebenenfalls geringfügig durch kleine Mengen an Trialkoholen modifiziert sein können. Die Reaktion wird, gegebenenfalls unter Zusatz von Katalysatoren, wie Zinnoctoat oder DIbutylzinnoxid, solange durchgeführt, bis praktisch alle Carboxylgruppen (Säurezahl ≤ 1) umgesetzt sind. Die notwendige OH-Zahl von 35 bis 200, bevorzugt über 50 und unter 150, bzw. Molmasse von 500 bis 5000, bevorzugt über 600 und unter 3000, wird durch den verwendeten Alkoholüberschuß festgelegt. Zur Bestimmung der theoretischen Molmasse genügt die Bestimmung der OH-Zahl unter Berücksichtigung der Funktionalität von 2 bei linearem Aufbau. Die zahlenmittlere Molmasse wird dann errechnet nach der Formel

$$\overline{Mn} = \frac{56100}{OH\text{ - }Zahl} \times 2.$$

Die eingesetzten Dicarbonsäuren sind linear oder verzweigt aliphatisch, alicyclisch oder aromatisch aufgebaut. Die beiden Carboxylgruppen sind so angeordnet, daß sie kein innermolekulares Anhydrid bilden können, sie sind ausgewählt aus Adipinsäure, 2.2.4-Trimethyladipinsäure, Azelainsäure, Sebacinsäure, 1.3 und 1.4-Cyclohexandicarbonsäure, 1,4- oder 1,3-Di- oder Tetra-hydrophthalsäure, Isophthalsäure, und/oder Terephthalsäure. Die Dialkanole sind ebenfalls linear oder verzweigt aliphatisch, oder cyclisch aufgebaut, ihre beiden OH-Gruppen werden z.B. durch eine Kohlenstoffkette mit 3 bis 14 , bevorzugt 4 bis 8, C-Atomen voneinander getrennt. Für besonders hydrolysebeständige Polyester werden Diole mit sterisch gehinderten primären OH-Gruppen oder mit sekundären Hydroxylgruppen verwendet. Beispiele hierfür sind Butandiol-1.4, Hexandiol-1.6, Hexandiol-2.5, Cyclohexandiol-1,4, 2-Ethylhexandiol-1,3, 2.2.4-Trimethylpentandiol-1.3, Hydroxypivalinsäureneopentylglykolester, Cyclohexandimethanol, 2.2-Dimethyl-1.3-propandiol, 2-Ethyl-2-butyl-1.3-propandiol, 1,1-Isopropyliden-bis-(p-phenoxy)-1-ethanol, 2.2-Bis-(hydroxymethyl)-1-butanol, 1,3-Di-(hydroxyethyl)-5,5-dimethylhydantoin, sowie die hydrierten Bisphenole A oder F. Die Dialkohole können geringe Anteile an höheren Polyolen, wie beispielsweise Glycerin oder Trimethylolpropan enthalten, um eine Verzweigung einzuführen. Die Menge sollte jedoch so klein sein, daß keine vernetzten Produkte entstehen. Es werden 0 bis 6 Gew.-%, bevorzugt 0,5 bis 4 Gew.-%, bezogen auf das Polyesterpolyol an niedrig molekularen Triolen mit einer Molmasse von 60 bis 350 zugegeben. Es wird ein Linearer aliphatischer Aufbau der Polyesterpolyole bevorzugt, der gegebenenfalls anteilweise eine aromatische Dicarbonsäure enthalten kann und am Molekülende bevorzugt eine OH-Gruppe enthält. Die Polyesterpolyole weisen keine freien Carboxylgruppen auf und sind bevorzugt frei von olefinischen Doppelbindungen.

Als Polyesterpolyole können erfindungsgemäß auch Polyesterdiole eingesetzt werden; die durch Kondensation von Hydroxycarbonsäuren oder deren Lactonen erhalten werden. Sie zeichnen sich durch die wiederkehrenden Polyesteranteile der Formel

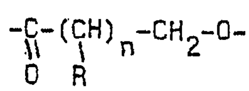

aus, wobei n = 3 bis 18, bevorzugt 4 bis 6 und der Substituent R Wasserstoff, ein Alkyl-, Cycloalkyl- oder Alkoxyrest ist. Kein Substituententhält mehr als 12 Kohlenstoffatome. Die Grundbausteine sind beispielsweise Hydroxycapronsäure, Hydroxybuttersäure, Hydroxydecansäure und/oder Hydroxystearinsäure.Als Ausgangsmaterial kann auch ein Lacton der folgenden allgemeinen Formel verwendet werden

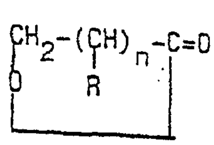

in der n und R die bereits angegebene Bedeutung haben. Für die Herstellung von Polyesterdiolen sind unsubstituierte ε-Caprolactone mit n = 4 und R = H bevorzugt, die mit niedermolekularen Polyolen gestartetwerden. Unter carboxylgruppenfreien.Polyesterdiolen werden auch OH-funktionelle Kohlensäureester verstanden, die beispielsweise durch Umsetzung von Kohlensäure-diethyl-, und/oder diphenylester mit Glykolen oder Dialkanolen, wie 1.6-Hexandiol hergestellt werden können.

Um die Molekularverteilung und die Anzahl der eingebauten Urethangruppen zu beeinflussen, können 2 bis 30 Gew.-% des höhermolekularen Polyesterdiols gegen niedrigmolekulare Polyole, bevorzugt Glykole oder Dialkanole ausgetauscht werden. Es werden hierfür bevorzugt die schon beim Polyester verwendeten Dialkanole mit einer Molmasse von 60 bis etwa 350 eingesetzt. Die dabei eingesetzten Dialkanole brauchen nicht identisch mit den im Polyester verwendeten zu sein.

Um das Polyesterurethanharz in Wasser lösen zu können, wird ein Teil der niedermolekularen Diole durch solche Diole ersetzt, die noch mindestens eine neutralisierbare Säuregruppe enthalten. Geeignete Säuregruppen, die zur Anionenbildung befähigt sind, sind Carboxyl- und/oder Phosphorsäuregruppen. Bevorzugt werden Carbonsäure oder Carboxylat-Gruppen verwendet. Sie sollen so reaktionsträge sein, daß die Isocyanatgruppen des Diisocyanats vorzugsweise mit den Hydroxylgruppen des Moleküls reagieren. Es werden dazu bevorzugt Alkansäuren mit zwei OH-Substituenten an den $\alpha$-ständigen Kohlenstoffatomen eingesetzt. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Beispiele für solche Verbindungen sind Dihydroxypropionsäure, Dihydroxybernsteinsäure, Dihydroxybenzoesäure und/oder Dihydroxy-Cyclohexanmonocarbonsäure. Eine besonders bevorzugte Gruppe von Dihydroxyalkansäuren sind die 2,2-Dialkylolalkansäure, die durch die Strukturformel

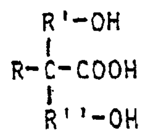

gekennzeichnet sind, worin R = Wasserstoff oder eine Alkylgruppe mit bis zu etwa 20 Kohlenstoffatomen bedeutet. R' und R'' unabhängig voneinander jeweils lineare oder verzweigte $C_1$ - $C_6$-Alkylenketten, bevorzugt - $CH_2$- sind. Beispiele für solche Verbindungen sind 2.2-Dimethylolessigsäure, 2.2-Dimethylolpropionsäure, 2,2-Dimethylolbuttersäure und 2.2-Dimethylolpentansäure. Die bevorzugte Dihydroxyalkansäure ist 2.2-Dimethylolpropionsäure. Es wird soviel Dimethylolpropionsäure in das Gemisch als Diol gegeben, daß die Säurezahl des fertiggestellten Polyesterurethanharzes 10 bis 50, bevorzugt über 15 und unter 40 beträgt. Die untere Grenze liegt besonders bevorzugt bei 20, die obere Grenze besonders bevorzugt bei 30. Verwendbare Phosphorsäuregruppen enthaltende Verbindungen sind z.B. 2,2-Dimethylolpropan-Phosphonsäure oder Diethanolamid-methanphosphonsäure. Es werden soviele von diesen Anionengruppen bildenden Monomeren zugesetzt, daß die Säurezahl des Polyesterurethanharzes im gewünschten Bereich liegt.

Als typische Diisocyanate zur Umsetzung mit dem Polyol-/Diol-Gemisch werden beispielsweise lineare oder verzweigt aliphatische, cycloaliphatische und/oder aromatische Kohlenwasserstoffe mit einem isocyanatgehalt von 20 bis 50 % verwendet. Sie enthalten als funktionelle Gruppen, bevorzugt zwei isocyanatgruppen, die im Molekül asymmetrisch oder symmetrisch angeordnet sind. Sie können aliphatisch, alicyclisch, arylaliphatisch oder aromatisch sein. Ihr Aufbau kann beispielsweise nach dem gewünschten Anwendungszweck des zu pigmentierenden Überzugsmittels gewählt werden. Beispielsweise kann man für den späteren Einsatz in Grundierungen oder Primer die Isomere oder Isomerengemische von organischen Diisocyanaten vom Toluylendiisocyanat verwenden. Andere Beispiele sind 1,4-Bis (isocyanat)benzol, 2.4-Bis-(isocyanat)toluoi, Bis-(isocyanat)isododecylbenzol, Bis-(2-isocyanat-phenyl)methan, 1.5-Bis-(isocyanat)naphthalin, 4.4'-Bis-(isocyanat)-3.3'-dimethylbiphenyl. Für Decklacksysteme werden beispielsweise aufgrund ihrer guten Beständigkeit gegenüber ultraviolettem Licht bevorzugt Diisocyanate eingesetzt, bei denen die Isocyanatgruppe an ein nichtaromatisches, gegebenenfalls $\alpha$-substituiertes C-Atom gebunden ist. Beispiele für verwendbare aliphatische Diisocyanate sind solche der allgemeinen Formel

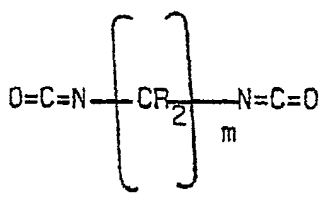

worin m eine ganze Zahl von 2 bis 20, insbesondere 5 bis 8 ist und R, das gleich oder verschieden sein kann, Wasserstoff oder einen niedrigen Alkylrest mit 1 bis 8 C-Atomen, vorzugsweise eine Methylgruppe darstellt. Beispiele hierfür sind 1.6-Bis-(isocyanat)pentan, 1.6-Bis-(isocyanat)hexan, 1.6-Bis-(isocyanat)-2.2.4-trimethylhexan, 1.4-Bis-(2-isocyanat-ethyl)cyclohexan oder 1.3-Bis-(2-isocyanatmethyl)cyclohexan. Beispiele für geeignete cycloaliphatische Diisocyanate sind 1.4-Bis-(isocyanat)cyclohexan, Bis-(4-isocyanat-cyclohexyl)methan, 5-isocyanat-3-(isocyanatmethyl)-1.1.3-trimethylcyclohexan oder Menthandiisocyanat. Als arylaliphatische Diisocyanate können verwendet werden beispielsweise 1.3-Bis-(1-isocyanatmethyl)benzol oder 1.4-Bis-(1-isocyanat-1-methylethyl)-benzol. Besonders bevorzugt sind Polyesterurethanharze auf Basis von 5-Isocyanat-3-(isocyanatmethyl)-1,1,3-trimethylcyclohexan (= Isophorondiisocyanat) und/oder Bis-(4-isocyanat-cyclohexyl)methan (= Desmodur W®) als Gemisch verschiedenersterischer Konfiguration. Die Synthese erfolgt durch gemeinsame Reaktion der Reaktanten im Gemisch oder stufenweise zu einem sequentierten Aufbau.

Bei der Herstellung der Polyester urethanharze wird das Äquivalentverhältnis des eingesetzten Diisocyanats in Abstimmung mit den eingesetzten Polyolen und Diolen so gewählt, daß das fertiggestellte Polyesterurethanharz ein Zahlenmittel der Molmasse ($\overline{M}n$) von 2000 bis 30000, bevorzugt über 3000 und unter 10000, gemessen mit einem Gelchromatographen in Tetrahydrofuran, geeicht mit Polystyrol. Die Viskosität des Polyesterurethanharzes liegt bei 10 bis 10000 mPa.s, bevorzugt über 50 und unter 5000 mPa.s, besonders bevorzugt über 100 und unter 3000 mPa. s, gemessen/in einem Rotationsviskosimeter mit koaxialer Zylindermeßeinrichtung und einem Schergefälle von 100 bis 2000 $sec^{-1}$, insbesondere 644 $sec^{-1}$, in 40 % Lösung in dem zu seiner Synthese verwendeten Lacklösemittel, insbesondere in Butoxyethanol bei 25°C, nach der Normvorschrift (DIN 53 019, entsprechend ISO 3219).

Das Carboxyläquivalentgewicht des Polyesterurethanharzes liegt zwischen 1000 und 6000, bevorzugt über 1500 und unter 4000. Es kann leicht auf die Weise bestimmt werden, daß man das Gewicht des Polyesterurethanharzes durch die Anzahl der im Polymeren vorhandenen Carboxylgruppen dividiert. Die Polyesterurethanharze sind bevorzugt nicht vernetzt, d. h. sie sind bevorzugt mikrogelfrei.

Aus den erfindungsgemäßen Polyesterurethanharzen wird ohne Verwendung von Emulgatoren unter Zusatz von Neutralisationsmitteln, Wasserund gegebenenfalls weiteren organischen Lösemittein das Pastenharz ("Pasten-Bindemittel") hergestellt, in dem Pigmente angerieben werden können. Dabei wird zunächst das Pastenharz mit wasserverdünnbaren, polaren organischen Lösemitteln auf einen Festkörper von 50 bis 90, bevorzugt über 60 und unter 85 Gew.-% verdünnt. Hierbei verbleiben die von der Herstellung des Pastenharzes vorhandenen Lösemittel im Bindemittel oder sie werden gegebenenfalls unter Vakuum bei erhöhten Temperaturen abdestilliert und durch protonenaktive organische Lösemittel ersetzt. Hierzu dienen beispielsweise Alkohole wie Ethanol, Isopropanol, n-Butanol, sec-Butanol oder Alkoxyethanole und Alkoxypropanole. Bevorzugt werden sec-Butanol oder Butoxyethanol. Diese Lösemittel sollen als Lösungsvermittler dienen und die Viskosität des Pastenbindemittels so einstellen, daß es verarbeitungsfähig bleibt.

Die Löslichkeit in Wasser wird durch Salzbildung mit Ammoniak und/oder Aminen, z.B. primären, sekundären und/oder tertiären Alkyl- und/oder Alkanolaminen hergestellt. Dabei tritt ein starker Viskositätsanstieg auf. Es wird soviel Amin zugegeben, daß die Carboxylgruppen zu 70 bis 100 %, bevorzugt über 80 und unter 95 %, neutralisiert sind. Die eingesetzten Amine besitzen einen $pK_B$-Wert von $\leqq 6$ und sind zweckmäßigerweise mit Wasser mischbar. Bevorzugt werden solche, die einen möglichst hohen Dampfdruck haben, d.h. aus einem später aufgetragenen Film möglichst schnell flüchtig sind. Beispiele für Amine sind Diethylamin, Triethylamin, Monoethanolamin, Methylethanolamin, Dimethylaminoethanol, Dimethylisopropanolamin, 2-Dimethylamino-2-methyl-1-propanol, 2-Amino-2-methyl-1-propanol, Morpholin oder n-Methylmorpholin. Anschließend verdünnt man vorsichtig mit bevorzugt vollentsalztem Wasser bis eine praktisch klare, hochviskose Pasten-Bindemittelzusammensetzung entsteht. Die Viskosität der Zusammensetzung liegt so, daß ihre obere Grenze durch die Verarbeitbarkeit gegeben ist.

Bei einem Festkörpergehalt von 20 bis 40, bevorzugt über 25 und unter 35 Gew.-% liegt die Viskosität bei Messung mit einem Rotationsviskosimeter zwischen 50 und 5000 mPa.s, bevorzugt über 100 und unter 3000 mPa.s, unter Verwendung einer koaxialen Zylindermeßeinrichtung mit einem Schergefälle von 644 $sec^{-1}$ (nach der Normvorschrift 53 019; ISO 3219).

In diesem Pastenbindemittel können sowohl deckende wie auch transparente Pigmente angerieben werden, um farbige Metalleffekte oder Unifarbtöne zu erhalten. Dabei kann in üblicher Weise vorgegangen werden. Als Farbmittel können z.B. solche eingesetzt werden wie sie in der deutschen Norm DIN 55 944 beschrieben sind. Als Pigmente eignen sich anorganische Pigmente, wie beispielsweise Titandioxid, Ruß, Eisenoxide und/oder organische Pigmente, wie beispielsweise Phthalocyanine, Chinakridone undloder halogenierte Thioindigopigmente, sowie Füllstoffe, wie Bariumsulfat, Talkum oder Schichtsilikate. Als Dispergieraggregate eignen sich Rührscheibengeräte, Dreiwalzenstühle, Kugelmühlen oder bevorzugt Sand- oder Perlmühlen. Die optimale Mahlgut-Zusammensetzung ergibt sich aus der geeigneten Kombination der Hauptbestandteile des Mahlgutes - Pigment, Bindemittel und Lösemittel (Wasser) - und muß für jedes Dispergieraggregat gesondert bestimmtwerden. Es ist die Aufgabe des Dispergierprozesses Pigmentagglomerate soweit wie möglich wieder in Einzelteile zu zerlegen, um ihre volle Wirksamkeit in optischer Hinsicht entfalten zu können. Dabei muß mindestens sowiel Bindemittel im Mahlgut vorhanden sein, wie zur vollständigen

Benetzung des Pigmentes ausreichen. Im allgemeinen ist es günstig so konzentriert wie möglich zu arbeiten, um so wenig Pastenharz wie möglich in eine spätere Lackrezeptur einzuschleppen. Der in Betracht kommende Viskositätsbereich wird so festgelegt, daß in möglichst kurzer Zeit eine vollständige Dispergierung erreicht wird. Die optimale Mahlgutzusammensetzung wird auf das jeweilige Pigment abgestimmt. Die Pigmentpasten zeigen im allgemeinen eine strukturviskose Rheologie. Das Mahlgut kann vor oder nach dem Anreiben zusätzlich mit Anteilen der nachstehend beschriebenen wässrigen Bindemitteldispersion verdünnt werden, um Tönarbeiten zu erleichtern.

Dem Mahlgut können übliche Hilfsmittel, wie Antischaummittel und Dispergierhilfsmittel zugesetzt werden. Um die Oberfläche der Pigmente einwandfrei zu benetzen, kann es günstig, aber nicht notwendig, sein, dem Mahlgut Dispergierhilfsmittel (Netzmittel) zuzusetzen die von der Oberfläche der Pigmente adsorbiert werden und durch Herabsetzen der Grenzflächenspannung zwischen Pigment und Bindemittel den Benetzungsvorgang zusätzlich unterstützen. Als Netzmittel sind beispielsweise für diesen Zweck übliche geeignet. Metallische oder nichtmetallische Effektpigmente, wie Aluminium-Bronzen, Periglanz- oder Interferenz-Pigmente werden im allgemeinen in einem getrennten Arbeitsgang benetzt und dann in die angeriebene farbgebende, transparente Pigmentpaste eingerührt.

Zur Einstellung der Viskositätseigenschaften können beim Mahlvorgang gegebenenfalls zusätzliches Wasser, Lösemittel und/oder Ammoniak bzw. Amin zugesetzt werden. Bevorzugt werden zur Herstellung von Pigmentpasten 5 bis 65, insbesondere 13 bis 63 Gewichtsteile Pigment und/oder Füllstoff angerieben mit 10 bis 95, insbesondere 12 bis 60 Gewichtsteilen der erfindungsgemäßen Bindemittelzusammensetzung. Zusätzlich können bevorzugt 0 bis 40 Gewichts-teile Wasser, 0 bis 5 Gewichtsteile Lösemittel, 0 bis 5 Gewichtstelle Ammoniak und/oder Amin und 0 bis 5 Gewichtsteile Hilfsmittel zugesetzt. Die vorstehend genannten Gewichtsteile addieren sich jeweils auf 100 Gewichtstelle.

Zur Komplettierung, bzw. zum Auflacken des Mahlgutes können praktisch alle mit dem Pastenharz verträglichen wasserverdünnbaren Kunstharze wie beispielsweise mit Fettsäuren modifizierte, gegebenenfalls urethanisierte oder acrylierte Alkydharze, ölfreie, gegebenenfalls urethanisierte oder acrylierte Polyester, selbstvernetzende und/oder fremdvernetzende Acrylatharze oder ihre Gemische verwendet werden. Besonders geeig net ist das erfindungsgemäße Pastenharz zum Pigmentieren von niedrigviskosen, lösemittelarmen, wässrigen Kunstharz-Dispersionen mit

a. einer Säurezahl von 5 bis 50, bevorzugt über 10 und unter 40, besonders bevorzugt unter 30,
b. einer Viskosität der wässrigen Emulsion unter 500 mPa.s, bevorzugt unter 300 mPa.s, besonders bevorzugt unter 200 mPa.s, und
c. einer mittleren Teilchengröße von 50 bis 500 nm, bevorzugt unter 300 nm, besonders bevorzugt unter 200 nm und bevorzugt über 75 nm, besonders bevorzugt über 100 nm.

Beispiele für solche wasserverdünnten Produkte sind Emulsions-Copolymere, harnstoffgruppenhaltige Polyurethan-Dispersionen, sowie Dispersionen aus acrylierten Polyestern und acrylierten Polyurethanen.

Geeignete emulgatorhaltige oder bevorzugt emulgatorfreie Emulsionscopolymere werden unter Verwendung von radikalisch polymerisierbaren Monomeren wie Styrol, Acrylsäure, Methacrylsäure, Acrylsäureestern und Methacrylsäureestern bei Reaktionstemperaturen von 20 bis 95°C nach dem bekannten Stand der Technik hergestellt.

Besonders bevorzugt werden Kombinationen von Melaminharzen mit Polyurethan-harnstoff-Dispersionen und acrylierten Polyestern oder mit acrylierten Polyurethanharzen. Ähnliche Lacksysteme werden auch in den DE-A-36 38 124 (acrylierter Polyester und Polyurethan-harnstoff-Dispersion) und DE-A-37 22 005 (acryliertes Polyurethanharz) beschrieben.

Zum Auflacken oder Komplettieren des Überzugsmittels bzw. Lacksystems geeignete Polyurethan-(harnstoff) Dispersionen werden z.B. hergestellt durch Kettenverlängerung eines anionischen Prepolymeren mit endständiger Isocyanatgruppe mit Polyolen, Polyaminen und/oder Hydrazin-Verbindungen, wobei die Kettenverlängerung nach Neutralisation der Säuregruppen mit tertiären Aminen und Emulgieren In Wasser erfolgt. Die Säurezahl wird durch die bei der Herstellung eingesetzte Menge an anionengruppenhaltigen Verbindungen im isocyanatgruppenhaltigem Prepolymer gesteuert. Die Teilchengröße ist abhängig von der Molmasse des eingesetzten OH-Polyesters, der Säurezahl und der Aufbausequenz. Die zahlenmittlere Molmasse, gemessen mit einem Geichromatographen in Dimethylformamid, geeicht mit Polystyrol, liegt zwischen 20000 und 500000, bevorzugt über 40000 und unter 350000. Es werden bevorzugt harnstoffgruppenhaltige Polyurethan-Dispersionen hergestellt, die mindestens 2, bevorzugt 4 Urethangruppen und mindestens eine COOH-Gruppe im NCO-Prepolymer enthalten.

Die Herstellung derzum Einsatz in Polyurethanharnstoffdispersionen geeigneten anionischen isocyanatgruppenhaltigen Prepolymeren erfolgt z.B, durch gleichzeitige Umsetzung eines Polyolgemisches mit Di-isocyanaten im Überschuß, besonders in einem bevorzugten Verhältnis von NCO- zu OH-Gruppen von über 1.00 bis 1.4. Das Polyolgemisch besteht bevorzugt aus einem oder mehreren gesättigten Polyesterdiolen, gegebenenfalls unter Zusatz von einem oder mehreren niedrigmolekularen Polyolen, bevorzugt Diolen und einer Verbindung mit zwei gegenüber Isocyanat-Gruppen H-reaktiven Gruppen, die zusätzlich eine zur Anionenbildung befähigte Gruppe enthalten. Die Reaktion erfolgt bei Temperaturen von 20 bis 150 °C, bevorzugt von 45 bis 90 °C, gegebenenfalls unter Zusatz von Katalysatoren. Die Polyaddition wird nach raschem Mischen unter gutem Rühren in der Schmelze oder nach Verdünnen mit trockenen Lösemitteln, die nicht mit der isocyanatgruppe reagieren und beispielsweise wie vorstehend bei der Herstellung der Pastenharze beschrieben sind, durchgeführt. Sie läuft solange, bis praktisch alle Hydroxylgruppen umgesetzt sind. Andererseits kann die Reaktion auch in sequentierter Reihenfolge stufenweise vorgenommen werden. Beispielsweise erfolgt erst die Reaktion des OH-Polyesters mit dem Diisocyanat unter Ausbildung von Weichsegmenten. Danach wird die restliche Isocyanatmenge mit der Anionengruppen enthaltenden Verbindung und gegebenenfalls niedrigmolekularen Dialkanolen unter Zusatz von weiterem Isocyanat zu einem Hartsegment umgesetzt, wobei Dialkanol und Diisocyanat nicht identisch mit dem in der ersten Stufe eingesetzten zu sein brauchen. Die für die Herstellung des OH-gruppenhaltigen Polyesters, der niedrig molekularen Dialkanole und der Diisocyanate verwendeten Rohstoffe entsprechen dem vorstehend für die Herstellung der Pastenharze beschriebenen.

Bis zu 97 Gew.-% des gesamten Polyolgemisches können aus gesättigtem OH-Polyester der Molmasse 400 bis 5000, bevorzugt über 600 und unter 3000 bestehen. Bis zu 30 Gew.-% der gesamten Polyolmenge einschließlich der durch Anionengruppen modifizierten Dialkanole, bevorzugt über2 und unter20 Gew.-% sind niedrigmolekulare Dialkanole mit einer Molmasse von 60 bis zu etwa 350. Die durch die.Anionengruppen-Neutralisation in Salzform verfügbare Menge an ionischen Carboxylgruppen beträgt im allgemeinen wenigstens 0,4 Gew.-% bis etwa 6 Gew.-%, bezogen auf Feststoff. Das Isocyanat-Prepolymer enthält 0,2 bis 15 Gew.-% Isocyanatgruppen, bezogen auf den Festkörper. Die Menge an trocknem organischem Lösemittel, das nicht mit Isocyanat reagieren darf, kann in weiten Grenzen variieren und sollte zur Bildung einer Prepolymer-Lösung mit geeigneter Viskosität ausreichen. Sieden die gegebenenfalls nicht wasserlöslichen Lösemittel niedriger als das Wasser, so können sie nach der Herstellung der Polyurethan-(harnstoff)Dispersion durch Vakuum-Destillation oder Dünnschicht-Verdampfung schonend abdestilliert werden. Besonders bevorzugt werden als Lösemittel N-Methylpyrrolidon und/oder Ketone, wie Methylethylketon und Aceton, und/oder Ester, wie Essigsäureethylether.

Die anionischen Gruppen des für die Herstellung der Polyurethandispersion eingesetzten NCO-Prepolymeren werden mit einem tertiären Amin mindestens teilweise neutrallsiert. Die dadurch geschaffene Zunahme der Dispergierbarkeit in Wasser reicht für eine unendliche Verdünnbarkeit aus. Sie reicht auch aus, um das neutralisierte harnstoffgruppenhaltige Polyurethan stabil zu dispergieren. Geeignete tertiäre Amine sind beispielsweise Trimethylamin, Triethylamin, Dimethylethylamin, Dimethylbutylamin, N-Methylmorpholin, N-Ethylmorpholin oder Alkoxyalkylamine, wie 2-Methyl-oxyethyl-dimethylamin. Unter schonenden Bedingungen, z.B. bei 20 bis 30°C, können auch tertiäre Dialkylaminoalkohole wie beispielsweise N-Dimethylisopropanolamin verwendet werden. Das NCO-Prepolymer wird nach der Neutralisation mit Wasser verdünnt und ergibt dann eine feinteilige Dispersion. Kurz danach werden die noch vorhandenen Isocyanatgruppen mit Di- und-/oder Polyaminen mit primären und/oder sekundären Aminogruppen, sowie Hydrazin und seinen Derivaten oder Dihydraziden als Kettenverlängerer umgesetzt. Diese Reaktion führt zu einer weiteren Verknüpfung und Erhöhung der Molmasse. Die Konkurrenzreaktion zwischen Amin und Wasser mit dem Isocyanat wird, um optimale Eigenschaften zu erhalten, gut abgestimmt (Zeit, Temperatur, Konzentration) und für eine reproduzierbare Produktion gut überwacht. Als Kettenverlängerer werden wasserlösliche Verbindungen bevorzugt, weil sie die Dispergierbarkeit des Prepolymeren in Wasser erhöhen. Bevorzugt werden organische Diamine, weil sie in der Regel die höchste Molmasse aufbauen, ohne das Harz zu gelieren. Dies ist durch geeignete Wahl des Verhältnisses der Aminogruppen zu den Isocyanatgruppen möglich. Die Menge des Kettenverlängerers wird von seiner Funktionalität, vom NCO-Gehalt des Prepolymeren und von der Dauer der Reaktion bestimmt. Das Verhältnis der reaktiven Aminogruppe im Kettenverlängerer zu den NCO-Gruppen im Prepolymeren sollte in der Regel geringer sein als 1 : 1 und vorzugsweise im Bereich von 1 : 1 bis 0,75 : 1 liegen. Die Anwesenheit von überschüssigem aktiven Wasserstoff, insbesondere in Form von primären Aminogruppen, kann zu Polymeren mit unerwünscht niedriger Molmasse führen.

Polyamine sind im wesentlichen Alkylen-Polyamine mit zwei bis 15 Kohlenstoffatomen. Sie können Substituenten tragen, die keine mit Isocyanat-Gruppen reaktiven Wasserstoffatome haben. Beispiele sind Polyamine mit linearer oder verzweigter aliphatischer, cycloaliphatischer und/oder aromatischer Struktur und wenigstens zwei primären Aminogruppen. Als Diamine sind zu nennen Ethylendiamin, Propylendiamin, 1.4-Butylendiamin, Piperazin, 1.4-Cyclohexyldimethylamin, 2-Methyl-pentamethylendiamin-1.5, Hexamethylendiamin-1.6, Trimethyl-hexamethylendiamin, Menthandiamin, isophorondiamin. 1.3- oder 1.4-Bis-(aminomethyl)-cyclohexan, 1-Methyl-2.4-diaminocyclohexan, 2-Methyl-1.6-hexandiamin,4.4-Diaminodicyclohexylmethan und Aminoethylethanolamin. Bevorzugte Diamine sind Ethylendiamin, Propylendiamin und 1-Amino-3-aminomethyl-3.3.5-trimethylcyclohexan oder Gemische davon. Die Kettenverlängerung kann wenigstens teilweise mit einem Polyamin erfolgen, das mindestens drei Aminogruppen mit reaktionsfähigem Wasserstoff aufweist, wie beispielsweise Diethylentriamin. Als Kettenverlängerer können auch Diamine verwendet werden, deren primäre Aminogruppen als Ketimin geschützt sind und die nach Emulgieren in Wasser durch die hydrolytische Abspaltung des Ketons reaktiv werden. Neben dem Hydrazin werden die Ketten auch mit substituierten Hydraziden, wie Monoalkyl- oder arylhydrazid oder Bishydraziden wie beispielsweise Adipinsäure-bishydrazid verlängert

In den Überzugsmitteln können die harnstoffgruppenhaltigen Polyurethandispersionen allein oder bevorzugt im Gemisch mit acrylierten Polyestern eingesetzt werden. Unter acrylierten Polyestern werden, wie in DE-A-28 11 913,

DE-A-33 01 729 und DE-A-35 44 337 beschrieben, Reaktionsprodukte verstanden, die durch radikalische Emulsionspolymerisation von copolymerisierbaren $\alpha,\beta$-ungesättigten Monomeren in Gegenwart von linearen oder verzweigten carboxyfunktionellen Polyestern, die gegebenenfalls noch Epoxy-Gruppen enthalten, unter Zusatz mindestens eines Polymerisationsinitiators bei Temperaturen von 0 bis 150 °C, vorzugsweise über 20 und unter 100 °C, besonders bevorzugt über 40 und unter 90 °C gegebenenfalls unter Druck hergestellt werden können. Geeignete Polykondensate werden in der Schmelze oder im azeotropen Kondensationsverfahren durch Umsetzung von Polycarbonsäuren und Polyalkoholen-, gegebenenfalls unter Zusatz von gesättigten oder ungesättigten Fettsäuren (Ölen) und/oder Epoxidverbindungen bei Temperaturen von 150 bis 260 °C erhalten. Sie haben eine solche Säurezahl, daß sie nach Neutralisieren in Wasser stabil dispergierbar sind.

Als polyfunktionelle Carbonsäuren werden lineare oder verzweigte aliphatische, cycloallphatische und/oder aromatische mehrbasische Carbonsäuren, vorzugsweise Di-, Tri- und Tetracarbonsäuren mit 4 bis 12 Kohlenstoffatomen pro Molekül oder deren veresterungsfähige Derivate wie beispielsweise Anhydride oder Methanolesterverwendet. Außer den schon bei den OH-Polyestern, die zur Herstellung von Polyurethanesterharzen verwendet werden, erwähnten Dicarbonsäuren werden beispielsweise Phthalsäureanhydrid, Tetrahydrophthalsäureanhydrid, Tricarbonsäuren, wie Trimellithsäureanhydrid oder Maleinsäure-Addukte an isoliert oder konjugiert ungesättigte Fettsäure oder Tetracarbonsäure wie Pyromellithsäuredianhydrid oder aus Trimellithsäureanhydrid und Dialkanolen hergestellte Bis-anhydride eingesetzt. Um Funktionalität und Härte einzustellen, enthalten die gegebenenfalls ölfrelen Polyester vorteilhaft auch kleine Mengen an einbasischen Säuren wie Benzoesäure, tert-Butylbenzoesäure, oderAbietinsäure. Es können jedoch auch hydroxylgruppenhaltige Carbonsäuren wie 5-Hydroxypentancarbonsäure oder ihr Lacton, Dimethylolpropionsäure, Salicylsäure, Weinsäure oder Cyclohexanol-monocarbonsäure eingeestert werden.

Als polyfunktionelle Alkohole werden bevorzugt lineare oder verzweigte aliphatische, cycloaliphatische und/oder araliphatische Alkohole mit 2 bis 6, vorzugsweise 2 bis 4 an nicht aromatische Kohlenstoffatome gebundene Hydroxylgruppen und 2 bis 4 Kohlenstoffatomen pro Molekül verwendet. Beispiele für solche Polyalkohole sind Glykole und Dialkanole wie sie schon für die OH-Polyester des Pastenharzes Verwendung finden. Um die Funktionalität zu steigern und Verzweigungen einzuführen, werden drei- oder höherwertige Polyalkohole eingesetzt wie Glycerin, Trimethylolpropan, Di- oder Trimethylolpropanether, Trimethylolethan, Pentaerythrit, Dipentaerythrit, 1.2.6-Hexantriol oder Trishydroxyethylisocyanurat. Die genannten Polyalkohole können in geringen Mengen durch einwertige Alkohole ersetzt werden. Die Auswahl der Alkoholkomponente richtet sich unter anderem nach dem gewünschten Gehalt an freien Hydroxylgruppen, nach der Menge eingesetzter Monocarbonsäure und der gewünschten Löslichkeit und Verdünnbarkeit. Die eingesetzten Polyester können gegebenenfalls mit Mono- oder Diisocyanaten teilweise urethanlsiert sein.

Um die geeignete Wasserlöslichkeit zu erhalten, kann die Herstellung der Harze beim entsprechenden Kondensationsgrad abgebrochen werden oder es wird vorteilhafter ein höhermolekularer OH-gruppenhaltiger Polyester mit Säureanhydriden, bevorzugt cycloaliphatischen Säureanhydriden umgesetzt. Einen ähnlichen Effekt erzielt man durch Reaktion mit Bisanhydriden, Trimellithsäureanhydrid, Trimellithsäure-mono-alkylester oder Maleinsäureanhydrid-Addukten an isoliert oder konjugiert ungesättigte Fettsäuren. Ein anderes vorteilhaftes Verfahren ist das Senken der Säurezahl eines stark sauren Polyester-Prekondensates durch mindestens teilweise Umsetzung mit epoxidgruppenhaltigen Verbindungen wie dem Glycidylester der Versaticsäure (Cardura® E-10), epoxidierten Leinöl oder Sojaöl oder Polyglycidylethern. Bevorzugt verwendet wird als OH-Polymer ein Reaktionsprodukt mit einer mittleren Molmasse ($\overline{M}n$) von zweckmäßigerweise 2000 bis 100000 (Gelchromatographie gegen Polystyrol-Standard) und einer bevorzugten Säurezahl von 5 bis 150, bezogen auf Festharz, aus

a) einem Polyester oder einem Copolymerisat mit einer Hydroxyl-Zahl von 20 bis 300, besonders über 40 und unter 200, speziell über 50 und unter 130, bezogen auf Festharz,
b) einem Trimellithsäure-Einheiten enthaltenden Polycarbonsäureanhydridgemisch mit einer Säurezahl von 10 bis 1000, bevorzugt über 100 und unter 800, das durch Umsetzung von Trimellithsäureanhydrid mit bevorzugt zweiwertigen Alkoholen hergestellt wird, und
c) epoxidierten Ölen mit Epoxy-Zahlen von 1 bis 50, bevorzugt über 2 und unter 25, speziell über 3 und unter 15,

wobei das Äquivalentverhältnis von Carboxylgruppen zu Epoxid-Gruppen 3:1 bis 1:3, vorzugsweise 1,25:1 bis 1:1,25 und das Festkörper-Verhältnis von Bisanhydrid (b) zu OH-Polymer (a) zwischen 50:50 und 10:90, bevorzugt 40:60 bis 15:85 beträgt.

Aus dem so hergestellten Polyester wird bevorzugt nach Neutralisation eine wässrige Dispersion hergestellt, in der ein Gemisch ungesättigter Monomere polymerisiert wird. Um die besten Bedingungen für die Emulsionspolymerisation zu erreichen, wird dem laufenden Polymerisationsansatz jedoch noch weiteres Wasser zugegeben.

Als $\alpha,\beta$-ungesättigte Monomere kommen praktisch alle radikalisch polymerisierbaren Monomeren in Frage, wobei jedoch die üblichen Einschränkungen für Copolymerisationen gelten, die durch das Q und e - Schema nach Alfrey und Price, bzw. die Copolymerisationsparameter vorgegeben sind. Die Auswahl der ungesättigten Monomeren,

die keine weiteren reaktiven Gruppen enthalten, erfolgt nach den mechanischen und Verträglichkeits eigenschaften. Der Einsatz hydrophiler Monomerer ist für die Durchführung der Polymerisation möglich, aber generell nicht notwendig. Es werden Acrylsäurealkylester, Methacrylsäurealkylester und/oder Maleinsäure- oder Fumarsäure-dialkylester eingesetzt, wobei die Alkylreste aus 1 bis 20 Kohlenstoffatomen bestehen und in linearer oder verzweigter aliphatischer Kette und/oder als cycloaliphatischer und/oder (alkyl)aromatischer Rest angeordnet sind. "Harte" Monomere mit hoher Glasübergang stemperatur als Homopolymeres sind beispielsweise die isomeren vom Vinylaromaten-Typ wie Styrol, α-Methylstyrol, Vinyltoluol, p-tert-Butylstyrol oder Methacrylsäureester mit kurzer aliphatischer Kette wie Methylmethacrylat, Ethylmethacrylat, aber auch Cyclohexylmethacrylat, Isobornylmethacrylat, Dihydrodicyclopentadienylmethacrylat, (Meth)acrylamid und/oder (Meth)acrylnitril. "Weiche" Monomere sind dagegen Acrylsäureester mit einer langen Alkoholkette wie n-Butylacrylat, Isobutylacrylat, tert-Butylacrylat, 2-Ethylhexylacrylat und/oder Laurylacrylat. ES können auch ungesättigte Ether wie Ethoxyethylmethacrylat oder Tetrahydrofurfurylacrylat eingesetzt werden. Monomere vom Vinylester-Typ, vorzugsweise Vinylester verzweigter $C_6$ bis $C_{16}$ - Monocarbonsäuren, besonders bevorzugt Vinylester der Versaticsäure, können bei Einhaltung geeigneter Reaktionsbedingungen anteilweise auch verwendet werden. Unter einpolymerisierbaren hydroxylgruppenhaltigen Monomeren werden solche verstanden, die außer einer ethylenisch ungesättigten Gruppe noch mindestens eine OH-Gruppe an einem linearen oder verzweigten aliphatischen, cycloallphatischen $C_2$ bis $C_{20}$-Kohlenstoffgerüst enthalten. Besonders geeignet sind (Meth)acrylsäurehydroxyalkylester wie Hydroxyethylacrylat, 2-Hydroxypropylmethacrylat, Butandiol-1.4-manoacrylat, Propylenglykolmonoacrylat, 2.3-Dihydroxypropylmethacrylat, Polypropylenglykol-monoacrylat oder auch Fumarsäure-dihydroxyalkylester. Es können jedoch auch N-Hydroxyalkyl(meth)acrylamide oder N-Hydroxyalkyl-fumarsäuremono- oder diamide, wie N-Hydroxyethylacrylamid oder N-(2-Hydroxypropyl)methacrylamid eingesetzt werden. Besonders elastische Eigenschaften sind bei Einsatz eines Reaktionsproduktes von Hydroxyalkyl(meth)acrylat mit ε-Caprolacton zu erhalten.

In geringen Mengen können außerdem ethylenisch polyungesättigte Monomere mit mindestens 2 radikalisch polymerisierenden Doppelbindungen eingesetzt werden, wie beispielsweise Divinylbenzol, 1.6-Hexandiol-diacrylat oder das Reaktionsprodukt aus Diisocyanat und Hydroxyalkyl(meth)acrylaten.

Durch den Einbau von 0 bis 60 Gew.-%, bevorzugt 0,5 bis 40 Gew.-%, thermisch reaktiver Vinylmonomerer können zunächst in Wasser dispergierfähige Polymerisate hergestellt werden, die dann nach dem Aufbringen auf ein Substrat über eine entsprechende thermische Nachbehandlung in den vernetzten Zustand übergehen. Ungesättigte Monomere, die zur Vernetzung geeignete Gruppen aufweisen, sind solche mit

a) Epoxidgruppen wie beispielsweise Glycidyl(meth)acrylat, bzw. Alkylglycidyl(meth)acrylat, Glycidyl-, bzw. Alkylglycidyl(meth)acrylamid oder Allylglycidylether;
b) blockierte Isocyanatgruppen wie beispielsweise im mit Caprolactam oder Ketoxim blockierten Isocyanatoethyl (meth)acrylat, 1-(4-Isopropenyl-phenyl)-1-methylisocyanat oder (1-Alkenyl)isocyanat;
c) N-Alkoxyalkylamide wie im Methoxy- oder Ethoxymethyl(meth)acrylamid, oder die entsprechenden Verbindungen anderer ethylenisch ungesättigten Säuren wie Malein-, Fumar-, Itacon- oder Crotonsäure; und/oder
d) Carboxylgruppen wie (Meth)acrylsäure, Maleinsäure, Fumarsäure oder ihre Halbester oder Halbamide.

Bei Verwendung von Glycidylmethacrylat und Methacrylsäure entsteht beispielsweise das entsprechende Glycidyldimethacrylat automatisch bei der Polymerisation. Bevorzugte Dispersionscopolymerisate können als Monomereinheiten bis zu 100 Gew.-% Methylmethacrylat und/oder n-Butylacrylat, 0 bis 20 Gew.-% Hydroxyethylmethacrylat, 0 bis 20 Gew.-% Glycidylmethacrylat und 0 bis 20 Gew.-% (Meth)acrylsäure enthalten, wobei die Summe der Monomereinheiten stets 100 ist. Besonders bevorzugt ist ein Mischungsverhältnis, das 15 bis 80 Gew.-% Methylmethacrylat, 15 bis 50 Gew.-% n-Butylacrylat, 0 bis 15 Gew.-% Glycidylmethacrylat und 0 bis 5 Gew.-% (Meth)acrylsäure als Monomereinheiten enthält.

Die Herstellung der Dispersion erfolgt beispielsweise so, daß man den Polyester als 5 bis 65 Gew.-%iges wässriges System vorlegt und dann die Vinylmonomeren unter Zusatz eines Polymerisationsinitiators und gegebenenfalls weiterer üblicher Zusätze wie Emulgatoren und/oder Schutzkolloiden und/oder Molekulargewichtsreglern polymerisiert. Bevorzugt werden 5 bis 95 Gew.-% des carboxylgruppenhaltigen und OH-gruppenhaltigen Polykondensates mit 95 bis 5 Gew.-% α,β-ungesättigten Monomeren copolymerisiert bezogen auf den Gesamtfeststoffgehalt des fertigen Harzes.

Bevorzugt werden mehr als 10, speziell mehr als 25 Gew.-% carboxyfunktionelles Polykondensat und bevorzugt weniger als 90, speziell weniger als 75 Gew.-% Monomere eingesetzt, wobei die Summe beider Bestandteile 100 Gew.-% beträgt. Die Polymerisation kann in der Weise durchgeführt werden, daß man das carboxyfu nktionelle Polymere mit dem gesamten Wasser als wässriges System zusammen mit einem Teil des Initiators vorlegt, auf die gewünschte Polymerisationstemperatur aufheizt und dann innerhalb von 30 bis 180 Minuten das Monomerengemisch mit dem Rest des initiators langsam zugibt. Es ist jedoch auch möglich jeweils einen Teil des Wassers mit dem carboxyfunktionellen Polymeren vorzulegen und aus dem verbleibenden Wasser, dem Rest des carboxylgruppenhaltigen Polymeren und den Vinylmonomeren eine Voremulsion herzustellen, die dann in die auf Polymerisationstemperatur

vorgehelzte und mit einem Polymerisationsinitiator versehene Vorlage langsam zugegeben wird. Nach Zulaufende wird der gesamte Ansatz noch für 1 bis 2 Stunden bei 60 bis 90 °C, vorzugsweise bei 70 bis 85 °C nachgerührt, wobei gegebenenfalls weiterer Initiator zugesetzt wird, um einen vollständigen Umsatz zu erzielen. Der Feststoffgehalt in den erhaltenen Polymerdispersionen beträgt im allgemeinen 5 bis 75 Gew.-%, vorzugsweise 10 bis 65 Gew.-%. Der Wert für die mittlere Molmasse $\overline{M}n$ des erhaltenen Polymerisates beträgt im allgemeinen 50000 bis 10 Millionen, vorzugsweise 75000 bis 1 Million, bezogen auf Polystyrol-Standard, gemessen über Gelpermeationschromatographie.

Die radikalbildenden initiatoren sind beispielsweise Percarbonate, Peresterwie tert.-Butylperpivalat, tert-Butylperoctoat, tert.-Butylperbenzoat, Peroxide wie Benzoylperoxid, o-Methoxybenzoylperoxid, Dichlorbenzylperoxid, Hydroperoxide wie tert.-Butylhydroxyperoxid oder Cumolhydroperoxid oder aliphatische Azoverbindungen wie Azodiisobuttersäuredinitril. Der Initiator kann wasserlöslich oder monomerlöslich sein. Bevorzugt sind z.B. Natrium-, Kalium-, Ammoniumperoxydisulfat, bzw. Natrium-, Kalium-, Ammoniumperoxydisulfat-Redoxsysteme mit Natrium-, Kalium-, Ammoniumsulfiden, -sulfiten oder anderen Reduktionsmitteln. Die Menge des Polymerisationsinitiators beträgt im allgemeinen 0.01 bis 10 Gew.-%, vorzugsweise 0.02 bis 5, insbesondere 0.05 bis 3 Gew.-%, bezogen auf die Gesamtmenge der Vinylmonomeren. Durch den Einsatz von Molekulargewichtsreglern wie Mercaptanen, halogenhaltigen Verbindungen und anderen radikalübertragenden Substanzen kann die Molmasse der Polymerisate in bekannter Weise herabgesetzt werden. Bevorzugt sind Butylmercaptan, Dodecylmercaptan, Tetrakismercaptoacetylpentaerythrit, tert. -Butyl-o-thlokresol, Chloroform, Bromoform, Trichlorethenylen, Trichlorbrommethan, Tetrachlorkohlenstoff und Toluol oder dimerisiertes α-Methylstyrol. Für die Herstellung eines guten wasserverdünnbaren Metallic-Basecoats werden Gemische aus 95 bis 10 Gew.-% acryliertem Polyester mit 5 bis 90 Gew.-% harnstoffgruppenhaltiger Polyurethandispersion verwendet.

Eine andere Gruppe wasserverdünnbarer, hochmolekularer, emulsionsartiger Bindemittel sind acrylierte Polyurethane, die entweder allein oder im Gemisch mit Polyurethan(harnstoff)dispersionen eingesetzt werden.

Unter acrylierten Polyurethanen werden z.B. Reaktionsprodukte verstanden, die durch radikalische Lösungs-, Emulsions- oder Suspensionspolymerisation von copolymerisierbaren α,β-ungesättigten Monomeren in Gegenwart von gegebenenfalls harnstoffgruppenhaltigen. Polyurethanharzen hergestellt werden. Die Herstellung einer stabilen Dispersion ist abhängig von der Säurezahl der Polyurethandispersion ($SZ_{(PU)}$) und dem Anteil der Monomeren nach der Formel

$$SZ_{(PU)} = \frac{SZ_{(Endprodukt)} \times 100}{100 \text{ - \% Monomer}}$$

Die Säurezahl der acrylierten Polyurethandispersion ($SZ_{(Endprodukt)}$) liegt zwischen 12 und 40. Die gegebenenfalls vorhandene Hydroxylzahl wird durch Hydroxylgruppen enthaltende ungesättigte Monomere eingebracht. Sie beträgt bevorzugt 5 bis 100. Die untere Grenze liegt vorteilhaft bei 20, die obere bei 80. Zur Herstellung des acrylierten Polyurethanharzes werden 95 bis 5 Gew.-% Polyurethanharz mit 5 bis 95 Gew.-%. ungesättigter Monomere verwendet. Bevorzugt wird eine Menge von weniger als 60 Gew.-%, besonders bevorzugt von weniger als 50 Gew.-% Poiyurethanharz und mindestens eine Menge von 20 Gew.-%, vorteilhaft von mindestens 30 Gew.-% Polyurethanharz eingesetzt, bezogen auf Gesamtfestharz. Das Herstellungsverfahren der wässrigen, gegebenenfalls mit Polyaminen kettenverlängerten Polyurethan-Dispersionen und die dafür eingesetzten Rohstoffe wurden vorstehend beschrieben. Es wird im allgemeinen ohne Zusatz von Emulgatoren gearbeitet. Die Polymerisation der Monomeren erfolgt in der gleichen Weise wie die schon beschriebene Herstellung acrylierter Polyester. Der wesentliche Unterschied liegt in der Verwendung einer Polyurethandispersion anstelle des carboxylgruppenhaltigen Polyesters für die Pfropfpolymerisation. Um eine Pfropfung zu unterstützen, können die verwendeten Dispersionen im Polyurethanharz noch ungesättigte Gruppen enthalten und zwar über den Einbau von ungesättigten Carbonsäuren, wie Malein-, Fumarsäure oder ungesättigten Fettsäuren in den Polyester oder über ungesättigte Monomere, wie Hydroxyalkyl(meth)acrylate, die Polyisocyanate zu Diisocyanaten defunktionallsieren. Als ungesättigte Monomere werden bevorzugt Mischungen von 16 bis 100 Gew.-%, vorteilhaft 20 bis 90 Gew.-%, insbesondere 35 bis 85 Gew.-% ethylenisch ungesättigter Monomere, die außer der ungesättigten Bindung keine weiteren reaktiven Gruppen tragen und 0 bis 65 Gew.-%, vorteilhaft 10 bis 60 Gew.-%, insbesondere 15 bis 50 Gew.-% einpolymerisierbarer, hydroxylgruppenhaltiger Monomere und 0 bis 7 Gew.-%, vorteilhaft ohne polyungesättigte Monomere verwendet. Beispiele für einsetzbare Monomere wurden schon'bei der Beschreibung der acrylierten Polyester angegeben.

Zur Herstellung der wässrigen Dispersion können die radikalisch polymerisierbaren ethylenisch ungesättigten Monomere der erwärmten wässrigen Dispersion des Polyurethanharzes langam zugesetzt werden. Dabei ist es möglich sowohl die gesamte Menge des Monomeren auf einmal zuzugeben als auch nur ein Teil vorzulegen und den Rest im Verlauf der Reaktion nachzudosieren. Die Monomeren können jedoch auch bevorzugt mit Hilfe eines Teils der Polyurethandispersion mit Wasser in eine Voremulsion gebracht werden, die dann langsam der vorgelegten restlichen Polyurethandispersion zugegeben wird. Als radikalische Initiatoren dienen bevorzugt wasserunlösliche organische

Initiatoren, die entweder der Vorlage zugesetzt oder mit den Monomeren zugetropft werden. Sie können jedoch auch in unterschiedlicher Konzentration anteilweise der Vorlage zugegeben werden, die ein Teil der Monomeren enthält. Der Rest der Initiatoren wird mit den restlichen Monomeren zudosiert. Die radikalische Initiierung erfolgt durch thermische Zersetzung von organischen Peroxiden wie tert-Butylperoctoat oder mit Azo-Verbindungen wie Azo-bis-isobutyronitril. Die Reaktionstemperatur ergibt sich aus der Zerfallsgeschwindigkeit des Initiators und kann gegebenenfalls durch geeignete Redoxsysteme gesenkt werden. Die Polymerisation erfolgt im allgemeinen bei einer Temperatur von 30 bis 100 °C, insbesondere bei 60 bis 95 °C. Die Temperatur kann auf 130 °C gesteigert werden, wenn man unter Druck bis zu etwa 10 bar arbeitet.

Die zur Komplettierung verwendeten Bindemittel können zur Verbesserung der anwendungstechnischen Eigenschaften oder als Härter auch Amin-Formaldehyd-Kondensationsharze enthalten. Sie entstehen beispielsweise durch Reaktion von Aldehyden mit Harnstoff, N-Alkylharnstoff, Glykoluril, Dicyandiamid, verschiedenen Triazinen wie-Melamin, Benzoguanamin oder Acetoguanamin oder ihren Mischungen und anschließend bevorzugt vollständige Veretherung mit niedrigmolekularen Monoalkoholen. Je nach Reaktionsbedingungen (pH-Wert, Temperatur) und Methylolierungsgrad werden Harze mit verschiedenen Molmassen und unterschiedlicher Reaktivität erhalten. Als Aldehyde werden vorzugsweise Formaldehyd in wässriger und/oder alkoholischer Form als Halbacetatverwendet. Paraformaldehyd wird praktisch in Gegenwartverdünnter Säuren oder Basen in warmen Wasser oder Alkoholen hydrolysiert, bzw. depolymerisiert. Es ist jedoch der Einsatz anderer Aldehyde wie Glyoxal, Acetaldehyd, Isobutyroaldehyd oder Furfurol möglich. Im allgemeinen wird die Methylolierung bevorzugt mit Formaldehyd unter Zusatz schwacher Basen durchgeführt. Es werden vorteilhaft 3 bis 6 Methylolgruppen pro Molekül Melamin umgesetzt.

Die Methylolgruppen derAldehyd-Kondensationsprodukte werden bevorzugt vollständig mit Monoalkoholen unter saurer Katalyse umgesetzt. Besonders bevorzugt werden Methanol, Ethanol, Propanol, Butanol, Heptanol, Benzylalkohol, cyclische Alkohole, sowie Ethoxyethanol oder Butoxyethanol. Sollen Alkohole mit mehr als 4 Kohlenstoffatomen eingebaut werden, so wird die Methylolgruppe erst mit einem niedrigen Alkohol verethert und anschließend der höhere Alkohol durch Umetherung eingeführt. Die bevorzugten Alkohole sind Methanol und Butanol und seine Isomeren. Besonders bevorzugt sind Melaminharze, die mit 3 bis 6 Molen Formaldehyd umgesetzt und anschließend vollständig mit Methanol oder Methanol und n-oder iso -Butanol verethert sind. Die Harze werden nach dem Stand der Technik hergestellt und von vielen Firmen als Verkaufsprodukte angeboten. Bei Veretherung mit Hydroxycarbonsäuren wie Hydroxybenzoesäure, Salicylsäure oder Dimethylolpropionsäure entstehen carboxylgruppenhaltige, bei Verwendung von Hydroxyalkyl(meth)acrylaten oder Allylalkohol ungesättigte Melaminharze. Es können auch carbamylmethylierte Melaminharze eingesetzt werden, die durch Reaktion von alkoxymethylierten Melaminharzen mit Alkylcarbamaten unter schwach sauren Bedingungen hergestellt werden.

Die aus den beschriebenen Komplettierungs-Bindemittein und den erfindungsgemäßen Pigmentpasten hergestellten Überzugsmittel können vorteilhafterweise anorganische oder organische rheologische Additive enthalten. So wirken als Verdicker beispielsweise wasserlösliche Celluloseether, synthetische Polymere mit ionischen und/oder assoziativ wirkenden Gruppen wie Polyvinylalkohol, Pol(meth)acrylamid, Poly(meth)acrylsäure, Polivinylpyrrolidon, Styrol-Maleinsäureanhydrid oder Ethylen-Maleinsäureanhydrid-Copolymere und ihre Derivate oder auch hydrophob modifizierte ethoxylierte Polyurethane oder Polyacrylate. Besonders bevorzugt werden carboxylgruppenhaltige, gegebenenfalls anvernetzte Polyacrylat-Copolymere mit einer Säurezahl von 60 bis 780, bevorzugt 150 bis 300. Zur Rheologiesteuerung können auch Mikrogele zugesetzt werden.

Aufgrund der guten Benetzungseigenschaften geschieht das Auflacken unter Erhalt des Dispergierzustandes, d.h. es wird eine Flockulation der Pigmente verhindert. Die aus den Pigmentpasten hergestellten wasserverdünnbaren Überzugsmittel sind als Industrielacke besonders z.B. in der Autoindustrie einsetzbar. Sie führen bei Zusatz von z.B. Aluminiumplättchen zu Metallic-Basecoats, die neben hervorragendem optischen Effekt und ausgezeichneten mechanischen Eigenschaften eine gute Zwischenhaftung ergeben. Aufgrund dieser Haftungsvorteile sind die unter Verwendung der erfindungsgemäßen Pastenbindemittel bereiteten Überzugsmittel auch gut für Primer auf Kunststoffoberflächen zu verwenden. Sie zeigen ein geringes Anquellverhalten gegenüber Wasser, können störungsfrei mit Hilfe elektrostatischer Hachrotationsgeräte aufgetragen werden und haben gute Tieftemperatur-Elastizitäten. Sie können "naß-in-naß" mit einem Klarlack überspritzt und dann gemeinsam bei Temperaturen von beispielsweise 140 °C eingebrannt werden. Außerdem sind sie für Reparaturzwecke geeignet, weil sie schon nach Härten bei niedriger Temperatur wie beispielsweise 80 °C zu ausgezeichneten Eigenschaften führen.

Gemäß einer bevorzugten Ausführungsform betrifft die Erfindung wässrige Überzugsmittel, die die erfindungsgemäßen Bindemittelzusammensetzungen zur Herstellung von Pigmentpasten enthalten. Bevorzugt basieren die erfindungsgemäßen wässrigen Überzugsmittel auf einem filmbildenden Material auf der Basis einer wässrigen Dispersion von wasserverdünnbarem Bindemittel, die bevorzugt A) ein Gemisch aus 85 bis 100 Gew.-Teilen hochmolekularer, gegebenenfalls acrylierter Polyurethan(harnstoff)-Dispersion und 0 bis 15 Gew.-Teilen voll verethertem Amin-For maldehyd-Kondensationsharz oder B) ein Gemisch aus 20 bis 50 Gew.-Teilen hochmolekularer Polyurethan(harnstoff)-Dispersion, 5 bis 30 Gew.-Tellen voll verethertem Amin-Formaldehyd-Kondensationsharz und 40 bis 80 Gew. -Teile Alkyd- oder Polyesterharze, die urethanisiert oder acryliert sein können, oder selbst- oder fremdvernetzende

Acrylatharze enthalten, wobei 2 bis 20 Gew.-Teile der hochmolekularen Polyurethan(harnstoff)-Dispersion durch die erfindungsgemäße Bindemittelzusammensetzung zur Herstellung von Pigmentpasten ersetzt werden. Dabei beziehen sich die angegebenen Gewichtsprozent jeweils auf den Festkörpergehalt. Die wässrigen Überzugsmittel enthalten neben den vorstehend angegebenen prozentual aufgeschlüsselten Bestandteilen Pigmente sowie gegebenenfalls Füllstoffe, Lösemittel, Hilfs- und Zusatzstoffe.

Pastenharz 1

In einem Reaktionsgefäß mit Innenthermometer und Rückflußkühler werden 1687 g eines linearen, gesättigten Polyesters (aufgebaut aus Adipinsäure, sowie Neopentylglykol und Hexandioi-1.6 im Molverhältnis 1 : 1) mit einer Hydroxylzahl von 104 und einer Viskosität bei 25°C von 2.6 Pas unter gutem Rühren mit 275 g Dimethylolpropionsäure und 796 g Dicyclohexylmethandiisocyanat kalt gemischt und nach Abklingen der exothermen Reaktion erwärmt und bei 120°C gehalten bis der NCO-Gehalt unter 0.8 % liegt. Danach wird mit 888 g Butoxyethanol verdünnt:

| | |
|---|---|
| Festkörper (30 min 150°C) | 75 Gew.-% |
| Säurezahl (bezogen auf Festkörper) = | 38 |
| Viskosität ( bei 25°C) | 60 mPas* |
| nach Verdünnen auf 40 % mit Butoxyethanol | |

Auf 1920 g dieser Harzlösung werden dann ein Gemisch aus 88.6 g Dimethylisopropanolamin und 88.6 g Wasser schnell zugegeben. Nach 15 Minuten Rühren langsam mit 2350 g Wasser verdünnen zu einer hochviskosen fast klaren Paste mit folgenden Endwerten:

| | |
|---|---|
| Festkörper (30 min 150°C) | 34.1 Gew.-% |
| Viskosität (bei 25°C) | 400 mPas* |
| MEQ-Wert | 55 |
| pH-Wert | 6.8 |

Pastenharz 2

In einem Reaktionsgefäß mit Innenthermometer und Rückflußfühler werden 1395 g eines linearen, gesättigten Polyester (aufgebaut aus Adipinsäure und Hydroxypivalinsäureneopentyiglykolester) mit einer OH-Zahl von 112 und einer Viskosität bei 25°C von 8.7 Pas unter gutem Rühren mit 161 g Dimethylolpropionsäure und 163 g Trimethylolpropan zum Lösen auf 90°C erwärmt und dann auf 50°C abgekühlt. Nach Zusatz von 865 g Tetramethylxylylen-diisocyanat wird langsam auf 120°C erwärmt bis der NCO-Gehalt unter 0.2 % liegt. Danach wird mit 861 g Methoxypropanol verdünnt.

| | |
|---|---|
| Festkörper (30 min 150°C) | 75 Gew.-% |
| Säurezahl (bezogen auf Festkörper) | 27 |
| Viskosität bei 25°C, mit Methoxypropanol auf 40 % verdünnt | 210 mPas* |

Auf 1963 g dieser Harzlösung werden ein Gemisch aus 58.3 g Dimethylethanolamin und 58.3 g Wasser schnell zugegeben und auf 80°C erwärmt. Danach Langsam mit 2585 g Wasser verdünnen zu einer trüben, in der Wärme gut verarbeitbaren hochviskosen Paste mit folgenden Kennzahlen:

| | |
|---|---|
| Festkörper (30 min 150°C) | 32.3 Gew.-% |
| Viskosität bei 25°C | 1,3 Pas* |
| MEQ-Wert | 42 |
| pH-Wert | 7,6 |

Pastenharz 3

In einem Reaktionsgefäß mit Innenthermometer und Rückflußkühler werden 551 g einer linearen, gesättigten Polyesters (aufgebaut aus Adipinsäure und Hexandiol-1.6) mit einer Hydroxylzahl von 86 unter gutem Rühren mit 59.7 g Cyclohexandimethanol und 64 g Dimethylolpropionsäure in 297 g N-Methylpyrrolidon bei 50°C gelöst und 216 g

Hexandiisocyanat so Langsam zugegeben, daß die Temperatur nicht über 55°C ansteigt. Nach Abklingen der exothermen Reaktion bei 65°C halten bis der NCO-Gehalt kleiner 0.8 %. AnschLießend mit 26.7 g Methanol verdünnt.

| | |
|---|---|
| Festkörper (30 min 150°C) | 73,4 Gew.-% |
| Säurezahl (bezogen auf Festkörper) = | 31 |
| Viskosität bei 25°C, nach Verdünnen auf 40 % in NMP | 60 mPas* |
| Gelpermeationschromatographie | Mn = 2200 |
| in THF | Mw = 10000 |

564 g dieser Harzlösung werden auf 80°C erwärmt und ein Gemisch aus 24.6 g Triethylamin und 24.6 g Wasser zugegeben. Nach 5 Minuten Langsam mit 103.4 g Butoxyethanol und 501.6 g Wasser verdünnen zu einer in der Wärme gut verarbeitbaren, trüben hochviskosen Paste mit folgenden Kennzahlen:

| | |
|---|---|
| Festkörper (30 min 150°C) | 31,6 Gew.-% |
| Viskosität bei 25°C | 510 mPas* |
| MEQ-Wert | 58 |
| pH-Wert | 8,9 |

*gemessen in einem Rotationsviskosimeter mit koaxialer Zylindereinrichtung nach DIN 52 018 und 53 019 mit einem Schergefälle von 644 $sec^{-1}$

## Patentansprüche

1. Bindemittelzusammensetzungen mit einer Viskosität von 50 bis 5000 mPa.s gemessen in einem Rotationsviskosimeter mit koaxialer Zylindermesseinrichtung mit einem Schergefälle von 644 $sec^{-1}$ nach DIN 53019, und einem Festkörpergehalt von 20 bis 40 Gew.-%, bestehend aus:
20 bis 50 Gewichtsteile Polyesterurethanharz mit einer Säurezahl von 10 bis 50, dessen Säuregruppen zu 70 bis 100 % neutralisiert sind, erhältlich durch Umsetzung von

- einem oder mehreren, von Carboxylgruppen freien Polyesterpolyolen mit einer OH-Zahl von 35 bis 200 und einem Zahlenmittel der Molmasse von 500 bis 5000, die mit 2 bis 30 Gew.-%, bezogen auf das Polyesterpolyol, an niedermolekularen Diolen mit einer Molmasse von 60 bis 350, wobei ein Teil der niedermolekularen Diole mindestens eine zur Anionenbildung befähigte Säuregruppe enthält, und mit 0 bis 6 Gew.-%, bezogen auf das Polyesterpolyol, an niedermolekularen Triolen mit einer Molmasse von 60 bis 350 vermischt sind,

- worin die Polyesterpolyole erhältlich sind aus linear oder verzweigt aliphatischen, alicyclischen oder aromatischen Dicarbonsäuren, ausgewählt aus der Gruppe von Adipinsäure, 2.2.4-Trimethyladipinsäure, Azelainsäure, Sebacinsäure, 1.3- und 1.4-Cyclohexandicarbonsäure, 1.4- oder 1.3- Di- oder Tetrahydrophthalsäure, Isophthalsäure und/oder Terephthalsäure, und Dialkoholen, die 0 bis 6 Gew.-%, bezogen auf das Polyesterpolyol, der oben genannten Triole enthalten können, oder worin die Polyesterpolyole erhältlich sind durch Kondensation von Hydroxycarbonsäuren oder deren Lactonen unter Bildung von wiederkehrenden Polyesteranteilen der Formel

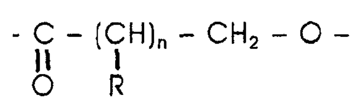

wobei n = 3 bis 18 und R = Wasserstoff, ein Alkyl-, Cycloalkyl- oder Alkoxyrest ist, mit

- einem oder mehreren DIisocyanaten, im Verhältnis der OH-Gruppen von Polyesterpolyol, Diol und Triol zu den NCO-Gruppen des DiIsocyanats von über 1,0 bis 1,3, wobei die Menge des Diisocyanats so gewählt wird, dass das erhaltene Polyesterurethan ein Zahlenmittel der Molmasse (Mn) von 2000 bis 30000 aufweist,

0,3 bis 18 Gewichtsteile Ammoniak und/oder Amin;

sowie
0 bis 25 Gewichtsteile eines oder mehreren zumindest teilweise mit Wasser mischbarer organischer Lösemittel; und
15 bis 75 Gewichtsteile Wasser,
wobei sich die Gewichtsteile auf 100 Gewichtsteile addieren.

**2.** Verfahren zum Einarbeiten eines Pigments und/oder Füllstoffs in wässrige Bindemittel für stabile wässrige Überzugsmittel, **dadurch gekennzeichnet, dass** man Pigment und/oder Füllstoff mit einer Bindemittelzusammensetzung nach Anspruch 1 anreibt, und die so erhaltene Paste In das wässrige Bindemittel für das Überzugsmittel einmischt.

**3.** Verfahren nach Anspruch 2, **dadurch gekennzeichnet, dass**
5 bis 65 Gewichtstelle Pigment und/oder Füllstoff mit
10 bis 95 Gewichtsteilen der Bindemittelzusammensetzung nach Anspruch 1 , sowie zusätzlich
0 bis 40 Gewichtsteilen Wasser,
0 bis 5 Gewichtsteilen Lösemittel,
0 bis 5 Gewichtsteilen Ammoniak und/oder Amin, und
0 bis 5 Gewichtsteilen üblichen Hilfsmitteln, wobei sich die Gewichtsteile auf 100 Gewichtsteile addieren, anreibt.

**4.** Verwendung der Bindemittelzusammensetzung nach Anspruch 1 zum Anreiben von Pigmenten für wasserverdünnbare pigmentierte Lacke.

**5.** Wässriges Überzugsmittel, enthaltend ein filmbildendes Material auf der Basis einer wässrigen Dispersion von wasserverdünnbaren Bindemitteln, die bezogen auf den Festkörper

A. 99 bis 70 Gewichtsteile einer oder mehrerer wasserverdünnter, hochmolekularer, emulsionsartiger Bindemittel mit einer Säurezahl des Festharzes von 5 bis 50, dessen Säuregruppen ganz oder teilweise neutralisiert sind, einer Viskosität unter 500 mPa.s, gemessen bei 25°C und einer mittleren Tellchengröße von 50 bis 500 nm, und
B. 1 bis 30 Gewichtsteile des Polyesterurethanharzes nach Anspruch 1 enthalten.

**6.** Wässriges Überzugsmittel nach Anspruch 5, enthaltend bezogen auf Festkörper,

A. 99 bis 70 Gewichtsteile eines Gemisches aus

1. wasserverdünntem, emulsionsartigem, hochmolekularem Bindemittel auf Basis Acrylatharz, acryliertes Polyurethanharz oder acrylierter Polyester und
2. hochmolekularen Polyurethan-(harnstoff)-Dispersionen im Verhältnis 1 : 10 bis 10 : 1 enthält, wobei

B. 1 bis 30 Gewichtstelle der hochmolekularen Polyurethan-(harnstoff)-Dispersion durch ein Polyesterurethanharz nach Anspruchl ersetzt sind.

**7.** Wässriges Überzugsmittel, enthaltend Pigmente, sowie ein filmbildendes Material auf der Basis einer wässrigen Dispersion von wasserverdünnbaren Bindemitteln, die

A) ein Gemisch aus:
85 bis 100 Gew.-Teilen einer hochmolekularen Polyurethan-(harnstoff)-Dispersion und 0 bis 15 Gew.-Teilen eines voll veretherten Amin-Formaldehyd-Kondensationsharzes oder
B) ein Gemisch aus:
20 bis 50 Gew.-Teilen einer hochmolekularen Polyurethan-(harnstoff)-Dispersion 5 bis 30 Gew.-Teilen eines voll veretherten Amin-Formaldehyd-Kondensationsharzes und 40 bis 80 Gew.-Teilen Alkyd- oder Polyesterharze, die urethanisiert oder acryliert sein können, oder selbst- oder fremdvernetzende Acrylatharze enthält, und wobei 1 bis 30 Gew.-Teile der hochmolekularen Polyurethan-(harnstoff)-Dispersion durch die Bindemittelzusammensetzung nach Anspruch 1 ersetzt sind, wobei sich die angegebenen Gewichtsteile jeweils auf den Festkörpergehalt beziehen und auf 100 Gewichtsteile addieren.

**8.** Wässriges Überzugsmittel nach Anspruch 6 oder 7, enthaltend zusätzlich Füllstoffe, Lösemittel und/oder lacksüb-

liche Hilfs- und Zusatzstoffe.

**9.** Pigmentpaste zur Einarbeitung in wässrige Überzugsmittel, enthaltend ein od,er mehrere Pigmente und/oder Füllstoffe, angerieben mit einer Bindemittelzusammensetzung nach Anspruch 1 ,

**10.** Pigmentpaste nach Anspruch 9, enthaltend
10 bis 95 Gewichtstelle der Bindemittelzusammensetzung nach Anspruch 1 ,
5 bis 65 Gewichtstelle Pigment und/oder Füllstoff, sowie zusätzlich
0 bis 40 Gewichtstelle Wasser,
0 bis 5 Gewichtstelle Lösemittel,
0 bis 5 Gewichtsteile Ammoniak und/oder Amin und
0 bis 5 Gewichtsteile übliche Hilfsmittel,
wobei sich die Gewichtsteile auf 100 Gewichtsteile addieren.

**11.** Verfahren zur Beschichtung eines Substrats durch Auftrag eines wässrigen Überzugsmittels und anschließende Härtung, **dadurch gekennzeichnet, dass** man ein wässriges Überzugsmittel verwendet, dem ein Pigment und/ oder Füllstoff, angerieben mit einer Bindemittelzusammensetzung nach Anspruch 1, zugesetzt wurde.

**12.** Verfahren zur Beschichtung eines Substrats durch Auftrag eines wässrigen Überzugsmittels und anschließende Härtung, **dadurch gekennzeichnet, dass** man ein wässriges Überzugsmittel nach Anspruch 5, 6 oder 7 aufträgt,

**Claims**

**1.** Binder composition with a viscosity of 50 to 5000mPa.s, measured in a rotational viscosimeter with coaxial cylinder measuring device with a shear gradient of 644 $sec^{-1}$ to DIN 53019, and a solids content of 20 to 40 wt.%, consisting of:
20 to 50 parts by weight of polyester urethane resin with an acid value of 10 to 50, acid groups of which are 70 to 100 % neutralised, obtainable by reacting

- one or more polyester polyols containing no carboxyl groups with an OH value of 35 to 200 and a number average molecular weight of 500 to 5000, which are mixed with 2 to 30 wt.%, related to the polyester polyol, of low molecular weight diols with a molecular weight of 60 to 350, wherein some of the low molecular weight diols contain at least one acid group capable of forming anions, and with 0 to 6 wt.%, related to the polyester polyol, of low molecular weight triols with a molecular weight of 60 to 350,
- wherein the polyester polyols are obtainable from linear or branched aliphatic, alicyclic or aromatic dicarboxylic acids selected from the group of adipic acid, 2,2,4-trimethyladipic acid, azelaic acid, sebacic acid, 1,3- and 1,4-cyclohexanedicarboxylic acid, 1 ,4- or 1 ,3-di- or tetrahydrophthalic acid, isophthalic acid and/or terphthalic acid, and dialcohols which can contain 0 to 6 wt.% referring to the polyester polyol, of the above-mentioned triols, or wherein the polyester polyols are obtainable by condensing hydroxycarboxylic acids, or their lactones, forming repeating polyester units of the formula

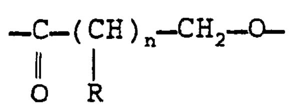

in which n = 3 to 18, and R is hydrogen, an alkyl, cycloalkyl or alkoxy residue, with
- one or more diisocyanates, with a ratio of the OH groups in the polyester polyol, diol and triol to the NCO groups of the diisocyanate of above 1.0 to 1.3, wherein the quantity of diisocyanate is selcted such that the polyester urethane obtained has a number average molecular weight (Mn) of 2000 to 30000,

0.3 to 18 parts by weight of ammonia and/or amine; together with 0 to 25 parts by weight of one or more at least partially water-miscible organic solvents, and 15 to 75 parts by weight of water, wherein the sum of the parts by weight is 100 parts by weight.

**2.** Process for the incorporation of a pigment and/or extender into aqueous binders for stable aqueous coating compositions,
**characterised in that**
pigment and/or extender is ground with a binder composition according to claim 1 and the paste so obtained is mixed into the aqueous binder for the coating composition.

**3.** Process according to claim 2, **characterised in that**

| | |
|---|---|
| 5 to 65 | parts by weight and/or extender are ground with |
| 10 to 95 | parts by weight of the binder composition according to claim 1, additionally together with |
| 0 to 40 | parts by weight of water, |
| 0 to 5 | parts by weight of solvent, |
| 0 to 5 | parts by weight of ammonia and/or amine and |
| 0 to 5 | parts by weight of customary auxiliaries, wherein the sum of the parts by weight is 100 parts by weight. |

**4.** Use of the binder composition according to claim 1 for grinding pigments for water-borne pigmented lacquers.

**5.** Aqueous coating composition containing a film-forming material based on an aqueous dispersion of water-borne binders which contain, related to solids content

| | | |
|---|---|---|
| A. | 99 to 70 | parts by weight of one or more water-borne high molecular weight, emulsion-type binders with an acid value of the solid resin of 5 to 50, the acid groups of which are entirely or partially neutralised, a viscosity of below 500 mPa.s, measured at 25°C and an average particle size of 50 to 500 nm, and |
| B. | 1 to 30 | parts by weight of the polyester urethane resin according to claim 1. |

**6.** Aqueous coating composition according to claim 5 containing, related to solids content,

| | | | |
|---|---|---|---|
| A. | 99 to 70 | parts by weight of a mixture of | |
| | | 1. | water-borne, emulsion-type, high molecular weight binder based on acrylate resin, acrylated polyurethane resin or acrylated polyester and |
| | | 2. | high molecular weight polyurethane (urea) dispersions in a ratio of 1:10 to 10:1, wherein |
| B. | 1 to 30 | parts by weight of the high molecular weight polyurethane (urea) dispersion are replaced with a polyester urethane resin according to claim 1. | |

**7.** Aqueous coating composition containing pigments, together with a film-forming material based on an aqueous dispersion of water-borne binders which contains

A) a mixture of:
85 to 100 parts by weight of a high molecular weight polyurethane (urea) dispersion and
0 to 15 parts by weight of a completely etherified amine-formaldehyde condensation resin or
B) a mixture of:
20 to 50 parts by weight of a high molecular weight polyurethane (urea) dispersion
5 to 30 parts by weight of a completely etherified amine-formaldehyde condensation resin and
40 to 80 parts by weight of alkyd or polyester resins, which may be urethanised or acrylated, or intrinsically or extrinsically crosslinking acrylate resins,

and wherein 1 to 30 parts by weight of the high molecular weight polyurethane (urea) dispersion are replaced with the binder composition according to claim 1, wherein the stated parts by weight all relate to the solids content and the sum of which is 100 parts by weight.

**8.** Aqueous coating composition according to claim 6 or 7 additionally containing extenders, solvents and or auxiliary substances and additives customary in lacquers.

**9.** Pigment paste for incorporation into aqueous coating compositions containing one or more pigments and/or extenders, ground with a binder composition according to claim 1.

**10.** Pigment paste according to claim 8 containing

| | |
|---|---|
| 10 to 95 | parts by weight of the binder composition according to claim 1, |
| 5 to 65 | parts by weight of pigment and/or extender, additionally together with |
| 0 to 40 | parts by weight of water, |
| 0 to 5 | parts by weight of solvent, |
| 0 to 5 | parts by weight of ammonia and/or amine and |
| 0 to 5 | parts by weight of customary auxiliary agents, |

wherein the sum of the parts by weight is 100 parts by weight.

**11.** Process for coating a substrate by applying an aqueous coating composition and subsequent curing, **characterised in that** an aqueous coating composition is used, to which has been added a pigment and/or extender ground with a binder composition according to claim 1.

**12.** Process for coating a substrate by applying an aqueous coating composition and subsequent curing, **characterised in that** an aqueous coating composition according to claim 5, 6 or 7 is applied.

**Revendications**

**1.** Compositions de liants ayant une viscosité de 50 à 50 000 mPa.s, la mesure étant faite au viscosimètre rotatif avec dispositif de mesure à cylindre co-axial sous une pente de cisaillement de 644 $s^{-1}$ selon norme allemande DIN 53 019, et à une teneur en matières solides de 20 à 40 % en poids, se composant de: 20 à 50 parties en poids d'une résine de polyester-uréthanne d'indice d'acide 10 à 50, dont les groupes acides sont neutralisés en proportions de 70 à 100 %, qu'on obtient par réaction de

- un ou plusieurs polyester-polyols exempts de groupe carboxyle, d'indice d'OH 35 à 200, moyenne en nombre du poids moléculaire 500 à 5 000, mélangés avec 2 à 30 % en poids, par rapport aux polyester-polyols, de diols à bas poids moléculaire, de masse moléculaire 60 à 350, une partie des diols à bas poids moléculaire contenant au moins un groupe acide capable de former des anions, et 0 à 6 % en poids, par rapport aux polyester-polyols, de triols à bas poids moléculaire, de masse moléculaire 60 à 350,
- les polyester-polyols pouvant être préparés d'acides dicarboxyliques linéaires ou ramifiés, de nature aliphatique alicyclique ou aromatique, de la groupe de l'acide adipique, l'acide 2,2,4-triméthyladipique, l'acide azélaïque, l'acide sébacique, les acides 1,3- et 1,4-cyclohexane-dicarboxyliques, les acides 1,4- ou 1,3-di- ou tétrahydrophtaliques, l'acide isophtalique, et/ou l'acide téréphtalique et de dialcohols qui peuvent contenir 0 à 6 % en poids du polyester-polyol des triols précédents, ou les polyester-polyols pouvant être préparés par condesation d'acides hydroxycarboxyliquies, ou de leur lactones, fournissant des motifs de polyesters répétés de formule

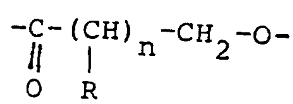

dans laquelle n = 3 à 18 et R représente l'hydrogène, un groupe alkyle, cycloalkyle ou alcoxy, avec
- un ou plusieurs diisocyanates, avec un rapport supérieur à 1,0 et pouvant aller jusqu'à 1,3 entre

les groupes OH des polyester-polyols, des diols et triols d'une part, et les groupes NCO des diisocyanates d'autre part, la quantité des diisocyanates étant choisie en sorte que le polyester-uréthanne obtenu ait un poids moléculaire, moyenne en nombre, Mn, de 2000 à 30 000,
0,3 à 18 parties en poids d'ammoniac et/ou d'une amine; et
0 à 25 parties en poids d'un ou plusieurs solvants organiques miscibles à l'eau en partie au moins; et
15 à 75 parties en poids d'eau,
toutes les indications de parties en poids se complétant à 100 parties en poids.

**2.** Procédé pour incorporer un pigment et/ou une matière de charge dans un liant aqueux destiné à des produits de revêtement aqueux stables, **caractérisé en ce que** l'on empâte le pigment et/ou la matière de charge avec une composition de liant selon revendication 1 et on mélange la pâte ainsi obtenue avec le liant aqueux destiné au produit de revêtement.

**3.** Procédé selon revendication 2, **caractérisé en ce que** l'on empâte

| | |
|---|---|
| 5 à 65 | parties en poids de pigment et/ou de matière de charge avec |
| 10 à 95 | parties en poids de la composition de liant selon revendication 1, et |
| 0 à 40 | parties en poids d'eau, |
| 0 à 5 | parties en poids de solvant, |
| 0 à 5 | parties en poids d'ammoniac et/ou d'une amine, et |
| 0 à 5 | parties en poids de produits auxiliaires usuels, les parties en poids indiquées se complétant à 100 parties en poids. |

**4.** Utilisation de la composition de liant selon revendication 1 pour l'empâtage de pigments destinés à des peintures pigmentées diluables à l'eau.

**5.** Produit de revêtement aqueux contenant une matière filmogène à base d'une dispersion aqueuse d'un liant diluable à l'eau et qui, sur les matières solides, contient

| | | |
|---|---|---|
| A. | 99 à 70 | parties en poids d'un ou plusieurs liants à haut poids moléculaire, diluables à l'eau, en émulsion, ayant un indice d'acide, sur la résine solide, de 5 à 50, dont les groupes acides sont neutralisés en totalité ou en partie, ayant une viscosité inférieure à 500 mPa.s, mesurée à 25°C, et une dimension de particule moyenne de 50 à 500 nm, et |
| B. | 1 à 30 | parties en poids de la résine de polyester-uréthanne selon revendication 1. |

**6.** Produit de revêtement aqueux selon revendication 5, contenant, sur les matières solides :

| | | | |
|---|---|---|---|
| A. | 99 à 70 | parties en poids d'un mélange de | |
| | | 1. | un liant à haut poids moléculaire, en émulsion, diluable à l'eau, à base d'une résine d'acrylate, d'une résine de polyuréthanne acrylé ou d'un polyester acrylé et |
| | | 2. | une dispersion de polyuréthanne-(urée) à haut poids moléculaire, dans des proportions relatives de 1 : 10 à 10 : 1. |
| B. | 1 à 30 | parties en poids de la dispersion de polyuréthanne-(urée) à haut poids moléculaire étant remplacés par une résine de polyester-uréthanne selon revendication 1. | |

**7.** Produit de revêtement aqueux contenant des pigments et une matière filmogène à base d'une dispersion aqueuse de liants diluables à l'eau, qui contient

A) un mélange de

| | |
|---|---|
| 85 à 100 | parties en poids d'une dispersion de polyuréthanne-(urée) à haut poids moléculaire et |
| 0 à 15 | parties en poids d'une résine de condensation amine/formaldéhyde entièrement éthérifiée, |

ou bien
B) un mélange de

| | |
|---|---|
| 20 à 50 | parties en poids d'une dispersion de polyuréthanne-(urée) à haut poids moléculaire, |
| 5 à 30 | parties en poids d'une résine de condensation amine/formaldéhyde entièrement éthérifiée et |
| 40 à 80 | parties en poids de résines alkydes ou de résines de polyesters qui peuvent être uréthannisées ou acrylées, ou de résines d'acrylates auto-réticulantes ou réticulant sous l'action d'agents étrangers, |

(suite)

| | |
|---|---|
| 1 à 30 | parties en poids de la dispersion de polyuréthanne-(urée) à haut poids moléculaire, étant remplacées par la composition de liant selon revendication 1, toutes les indications de parties en poids se rapportant aux matières solides et se complétant entre elles à 100 parties en poids. |

**8.** Produit de revêtement aqueux selon revendication 6 ou 7, contenant en outre des matières de charge, des solvants et/ou des produits auxiliaires et additifs usuels pour les peintures et vernis.

**9.** Pâte pigmentaire pour l'incorporation dans des produits de revêtement aqueux, contenant un ou plusieurs pigments et/ou matières de charge, empâtés avec une composition de liant selon revendication 1.

**10.** Pâte pigmentaire selon revendication 8, contenant

| | |
|---|---|
| 10 à 95 | parties en poids de la composition de liant de la revendication 1, |
| 5 à 65 | parties en poids de pigment et/ou de matière de charge, et |
| 0 à 40 | parties en poids d'eau, |
| 0 à 5 | parties en poids de solvant, |
| 0 à 5 | parties en poids d'ammoniac et/ou d'une amine et |
| 0 à 5 | parties en poids de produits auxiliaires usuels, |

les parties en poids se complétant à 100 parties en poids.

**11.** Procédé pour revêtir un support par application d'un produit de revêtement aqueux suivie d'un durcissement, **caractérisé en ce que** l'on utilise un produit de revêtement aqueux auquel on a ajouté un pigment et/ou une matière de charge empâtés par une composition de liant selon revendication 1.

**12.** Procédé pour revêtir un support par application d'un produit de revêtement aqueux suivie d'un durcissement, **caractérisé en ce que** l'on applique un produit de revêtement aqueux selon revendications 5, 6 ou 7.